# EUROPEAN PATENT APPLICATION

(11) **EP 4 567 599 A2**
(43) Date of publication of application: **11.06.2025**
(21) Application number: 24217671.7
(22) Date of filing: 05.12.2024
(51) Int. Cl.: G06F 9/50, G06F 15/78

(54) **BANDWIDTH CONTROL METHOD AND SYSTEM, ELECTRONIC DEVICE, AND VEHICLE**

(30) Priority: 19.08.2024 CN 202411139241; 19.08.2024 CN 202411139246
(71) Applicant: XG TECH PTE. LTD., Singapore 179098 (SG)
(72) Inventor: YU, Jianfeng, 179098 Singapore (SG)
(74) Representative: Epping - Hermann - Fischer

(57) **Abstract**

Embodiments of the present disclosure relate to the technical field of integrated circuits, and provide a bandwidth control method and system, an electronic device, and a vehicle. The method includes: determining bandwidth levels respectively corresponding to a plurality of functional modules in a first hardware unit; and controlling respectively, based on the bandwidth levels respectively corresponding to the functional modules, bandwidths for the functional modules for accessing a second hardware unit. In this way, when different operating systems (OS) run on the plurality of functional modules in the first hardware unit, respectively, the bandwidths for the functional modules corresponding to the operating systems for accessing the second hardware unit may be caused to match bandwidth resources available to the operating systems, thereby reducing access delay, reducing data waiting, and improving operating efficiency of a processor and performance of the operating systems.

## Description

### TECHNICAL FIELD

The present disclosure relates to the technical field of integrated circuits, and in particular, to a bandwidth control method and system, an electronic device, and a vehicle.

### BACKGROUND

When each operating system (OS) runs on some integrated circuits, such as a system on chip (SoC), each operating system may call a processor of the SoC to access at least one hardware unit (such as a storage), so as to read an instruction to be executed and write an execution result for the instruction. Each hardware unit may be allocated to at least one operating system for use.

Different hardware units have different bandwidth resources, and when a same hardware unit is allocated to multiple operating systems for use, bandwidth resources available to the operating systems may also be different. Therefore, bandwidths for the operating system for accessing the hardware unit may not match the bandwidth resources available to the operating systems. As a result, increased access delay and data waiting are caused, thus reducing operating efficiency of the processor and degrading performance of the operating systems.

### SUMMARY

Embodiments of the present disclosure provide a bandwidth control method and system, an integrated circuit, an electronic device, and a vehicle, so that when a plurality of operating systems run on an integrated circuit, bandwidths for the operating systems for accessing a hardware unit may be controlled to match bandwidth resources available to the operating systems.

According to a first aspect, an embodiment of the present disclosure provides a bandwidth control method. The method includes: determining bandwidth levels respectively corresponding to a plurality of functional modules in a first hardware unit, where the plurality of functional modules respectively correspond to different operating systems; and controlling respectively, based on the bandwidth levels respectively corresponding to the functional modules, bandwidths for the functional modules for accessing a second hardware unit.

According to a second aspect, an embodiment of the present disclosure provides a bandwidth control system. The system includes: a first hardware unit including a plurality of functional modules, where the plurality of functional modules respectively correspond to different operating systems; a second hardware unit in communication with the plurality of functional modules; and a plurality of bandwidth control modules in one-to-one correspondence to the plurality of functional modules, where each of the bandwidth control modules is disposed between the first hardware unit and the second hardware unit, and is configured to: determine bandwidth levels respectively corresponding to the functional modules in the first hardware unit; and control respectively, based on the bandwidth levels respectively corresponding to the functional modules, bandwidths for the functional modules for accessing the second hardware unit.

According to a third aspect, an embodiment of the present disclosure provides an electronic device. The electronic device includes the bandwidth control system according to the second aspect.

According to a fourth aspect, an embodiment of the present disclosure provides a vehicle. The vehicle includes the bandwidth control system according to the third aspect or the electronic device according to the fourth aspect.

According to the technical solutions provided in the embodiments of the present disclosure, when different operating systems run on the plurality of functional modules in the first hardware unit, respectively, the bandwidth levels respectively corresponding to the plurality of functional modules in the first hardware unit are determined, and the bandwidths for the functional modules for accessing the second hardware unit are controlled respectively based on the bandwidth levels respectively corresponding to the functional modules, so that the bandwidths for the functional modules corresponding to the operating systems for accessing the second hardware unit are caused to match bandwidth resources available to the operating systems, thereby reducing access delay, reducing data waiting, and improving operating efficiency of a processor and performance of the operating systems.

### BRIEF DESCRIPTION OF DRAWINGS

FIG. 1 is a block diagram illustrating a structure of a cockpit-driving integrated system according to an exemplary embodiment of the present disclosure;
FIG. 2 is a schematic diagram illustrating a structure of a bandwidth control system according to an exemplary embodiment of the present disclosure;
FIG. 3 is a schematic diagram illustrating a structure of a bandwidth control system according to another exemplary embodiment of the present disclosure;
FIG. 4 is a flowchart illustrating a bandwidth control method according to an exemplary embodiment of the present disclosure;
FIG. 5 is a flowchart illustrating step S130 of a bandwidth control method according to an exemplary embodiment of the present disclosure;
FIG. 6 is a flowchart illustrating step S131 of a bandwidth control method according to an exemplary embodiment of the present disclosure;
FIG. 7 is a schematic diagram illustrating that a bandwidth control module acquires a bandwidth level according to an embodiment of the present disclosure;
FIG. 8 is a flowchart illustrating a bandwidth control method according to another exemplary embodiment of the present disclosure;
FIG. 9 is a flowchart illustrating a bandwidth control method according to still another exemplary embodiment of the present disclosure;
FIG. 10 is a flowchart illustrating step S530 of a bandwidth control method according to an exemplary embodiment of the present disclosure;
FIG. 11 is a schematic diagram illustrating dynamic controlling of access bandwidths according to an exemplary embodiment of the present disclosure;
FIG. 12 is a schematic diagram illustrating dynamic controlling of access bandwidths according to another exemplary embodiment of the present disclosure;
FIG. 13 is a schematic diagram illustrating a structure of a bandwidth control apparatus according to an embodiment of the present disclosure;
FIG. 14 is a schematic diagram illustrating a structure of a bandwidth control apparatus according to another embodiment of the present disclosure;
FIG. 15 is a schematic diagram illustrating a structure of an integrated circuit according to an embodiment of the present disclosure; and
FIG. 16 is a schematic diagram illustrating a structure of an integrated circuit according to another embodiment of the present disclosure.

### DETAILED DESCRIPTION OF THE EMBODIMENTS

Exemplary embodiments of the present disclosure are described below in detail with reference to accompanying drawings. Obviously, the described embodiments are merely a part, rather than all, of embodiments of the present disclosure. It should be understood that the present disclosure is not limited by the exemplary embodiments described herein.

It should be noted that, unless otherwise specified, the scope of the present disclosure is not limited by relative arrangement, numeric expressions, and numerical values of components and steps described in these embodiments.

Bus: referring to a channel in a computer system that is used for connecting modules/units and implementing data transmission, where a main function of the bus is to transfer data, addresses, and control signals between different modules/units (such as a processor, a memory, an input/output (I/O) module, and a memory controller).

Bandwidth: referring to an amount of data transmitted per unit time, where units of bandwidth may be bits per second (bps), kilobits per second (Kbps), megabits per second (Mbps), gigabits per second (Gbps), and the like; or bytes per second (B/s), kilobytes per second (KB/s), megabytes per second (MB/s), gigabytes per second (GB/s), and the like.

Memory: referring to a device in a computer system that is used for temporarily storing data and instructions for fast access and execution by a processor, where the memory may include a random access memory (RAM), such as a dynamic RAM (DRAM) or a static RAM (SRAM).

Bandwidth resource: referring to a maximum amount of data that may be transmitted per unit time, where units of bandwidth resources may be bps, Kbps, Mbps, Gbps, and the like.

Memory bandwidth: also referred to as bandwidth resources of a memory, and referring to a maximum amount of data that may be transmitted by a memory per unit time.

SoC: referring to an integrated circuit where a plurality of modules/units of a computer system are integrated onto a single chip, where the modules/units that may be integrated onto the SoC include: a central processing unit (CPU), a graphics processing unit (GPU), a SRAM, an I/O interface, a digital signal processor (DSP), a neural processing unit (NPU), and an image signal processor (ISP).

### Application Overview

An operating system may run on an integrated circuit. For example, the integrated circuit may include a processor, and the operating system may run on the processor. The processor may establish communication with a memory (such as a DRAM or a SRAM) through a bus. In this way, during operation of the operating system, the operating system may load instructions into the memory; and the processor may read instructions and data from the memory through the bus, perform various operations, such as an arithmetic operation, a logical operation, and data transmission, according to these instructions, and then write instruction execution results into the memory.

A plurality of operating systems may run on a high-performance integrated circuit.

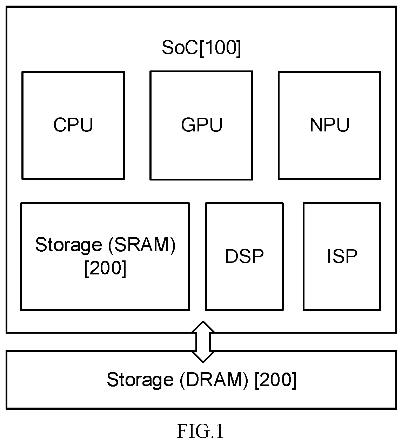

FIG. 1 is a block diagram illustrating a structure of a cockpit-driving integrated system according to an exemplary embodiment of the present disclosure.

The cockpit-driving integrated system may be applied to autonomous driving vehicles, such as a motor vehicle (an intelligent connected vehicle), a ship, a train, a subway, and an airplane; to various robots, such as a service robot, a transportation robot, an automated guided vehicle (AGV), and an unmanned ground vehicle (UGV); and to various construction machinery, and the like.

As shown in FIG. 1, in an embodiment, the cockpit-driving integrated system may include a SoC 100. In an example, the SoC 100 may include one or more functional modules, such as one or more CPUs, one or more GPUs, one or more ISPs, one or more DSPs, and/or one or more NPUs. These functional modules may provide computing resources for a plurality of operating systems to support the operating systems in implementing functions thereof.

In an embodiment, the cockpit-driving integrated system may further include a storage 200, in which instructions and/or data may be stored. A processor may read and execute the instructions from the storage 200, and write execution results into the storage 200. In an example, the storage 200 may include a memory, such as a DRAM and/or a SRAM. The storage 200 may be integrated on the SoC 100, such as a SRAM and an embedded DRAM (eDRAM), and in this way, the storage 200 may become part of the SoC 100. Alternatively, the storage 200 may be a separate device external to the SoC 100, such as a DRAM. In some examples, the storage 200 may further include a read-only memory (ROM), an erasable programmable read-only memory (EPROM), a flash memory, or the like, which is not specifically limited in the embodiments of the present disclosure.

In an embodiment, a plurality of operating systems, such as an operating system 1 (OS 1) to an operating system N (OS N), may run on the SoC 100. For example, the plurality of operating systems may include at least a cockpit operating system (cockpit system for short) and an intelligent driving operating system (intelligent driving system for short). The intelligent driving system is mainly responsible for autonomous driving and safety for a vehicle, including environmental perception, path planning, decision-making and control, and the like. The cockpit system is mainly responsible for driving and riding experience and human-computer interaction inside the vehicle, including information entertainment, instrument display, media playback, environmental control, and the like. Compared with the independent cockpit system and the independent intelligent driving system, the cockpit-driving integrated system has higher degrees of integration and intelligence, which is conducive to improving driving safety, comfort, and driving and riding experience of the vehicle.

When the plurality of operating systems run on the SoC 100, the cockpit-driving integrated system may include a plurality of storages 200, so as to meet service requirements on the plurality of operating systems. The plurality of storages 200 may include, for example, at least one SRAM and/or eDRAM integrated on the SoC 100, and/or at least one independently disposed DRAM or flash memory, or the like. For example, as shown in FIG. 1, the storages 200 include a SRAM and a DRAM, where the SRAM is integrated on the SoC 100, and the DRAM is disposed separately with respect to the SoC 100.

It may be understood that, because different storages 200 may have different hardware specifications, bandwidth resources of the different storages 200 may also be different. For example, the cockpit-driving integrated system includes three storages 200, such as a storage 200-1 to a storage 200-3. In this case, a bandwidth resource of the storage 200-1 may be 100 GB/s, a bandwidth resource of the storage 200-2 may be 50 GB/s, and a bandwidth resource of the storage 200-3 may be 10 GB/s.

When the plurality of operating systems run on the SoC 100, different storages 200 may be allocated to different operating systems for use, and/or a same storage 200 may be allocated to the plurality of operating systems for use. The plurality of operating systems share bandwidth resources of the storages 200. In other words, bandwidth resources of the storages 200 that are acquired by the operating systems may be different.

For example, assuming that three operating systems run on the SoC 100, the storage 200-1 may be allocated to the operating system 1 for use, the storage 200-2 may be allocated to the operating system 2 (OS 2) for use, and the storage 200-3 may be allocated to the operating system 3 (OS 3) for use. When implementing a function of a corresponding operating system, each processor in the SOC transmits access traffic to the storage 200 according to a maximum capability of the processor. In this case, if a bandwidth for the processor in the SOC for accessing the storage 200 is greater than a bandwidth resource available to the operating system corresponding to the processor, access congestion occurs, which results in increased access delay and data waiting, thus reducing operating efficiency of the functional modules and degrading performance of the operating system.

In addition, when the plurality of operating systems run on the SoC 100, a same storage 200 may be allocated to the plurality of operating systems for use, and each of the operating systems may acquire a part of a bandwidth resource of the storage. For example, the bandwidth resource of the storage 200-1 is 100 GB/s, and the bandwidth resource of 100 GB/s may be allocated to three operating systems for use, where a bandwidth resource of 40 GB/s is available to the operating system 1, a bandwidth resource of 30 GB/s is available to the operating system 2, and a bandwidth resource of 30 GB/s is available to the operating system 3. In this case, if a bandwidth for the operating system 1 for accessing the storage 200-1 is greater than the bandwidth resource allocated to the operating system 1, for example, greater than 40 GB/s, problems of increased access delay and data waiting may occur. Correspondingly, a processor on which the operating system 1 runs needs to wait to perform a next operation until transmission of the current access has been completed, which reduces operating efficiency of the processor and degrades performance of the operating system 1.

The embodiments of the present disclosure provide a bandwidth control method and system, an integrated circuit, an electronic device, and a vehicle, where when a plurality of operating systems run on an integrated circuit (such as a SoC), differentiated bandwidth control may be performed for behaviors of the operating systems accessing different storages, so that bandwidths for the operating systems for accessing the storages match bandwidth resources allocated to the operating systems, thereby avoiding problems of increased access delay and data waiting, and thus improving operating efficiency of a processor and performance of the operating systems.

### Exemplary System

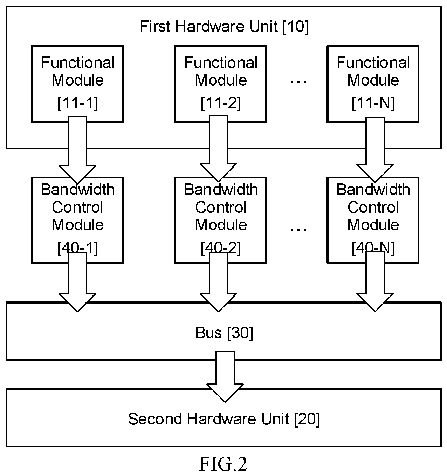

FIG. 2 is a schematic diagram illustrating a structure of a bandwidth control system according to an exemplary embodiment of the present disclosure.

The bandwidth control system may be implemented on an integrated circuit (such as a SoC 100). As shown in FIG. 2, in an embodiment, the bandwidth control system may include a first hardware unit 10.

The first hardware unit 10 may be disposed on the integrated circuit (such as the SoC 100). In other words, the integrated circuit (such as the SoC 100) includes the first hardware unit 10. For example, the first hardware unit 10 refers to one or more functional modules 11 on the integrated circuit (such as the SoC 100). Each of the functional modules 11 is configured to implement one or more functions of the integrated circuit (such as the SoC 100). For example, the functional modules 11 may include a CPU, a GPU, an NPU, an ISP, a DSP and the like.

A plurality of operating systems, such as an intelligent driving system, a cockpit system, and/or other operating systems, may run on the first hardware unit 10. The plurality of operating systems run on the first hardware unit 10. Different operating systems may run on different functional modules 11, or in other words, different functional modules 11 may be managed by different operating systems, or in other words, different functional modules 11 correspond to different operating systems. That is, a plurality of functional modules correspond to different Oss, respectively.

For example, it is assumed that three operating systems, namely, an operating system 1 to an operating system 3, respectively, may run on the first hardware unit 10, where the first hardware unit 10 includes eight CPUs, namely, a CPU 1 to a CPU 8, respectively. The operating system 1 may run on the CPU 1 and the CPU 2 (or in other words, the CPU 1 and the CPU 2 are managed by the operating system 1), the operating system 2 may run on the CPU 3 to the CPU 6 (or in other words, the CPU 3 to the CPU 6 are managed by the operating system 2), and the operating system 3 may run on the CPU 7 and the CPU 8 (or in other words, the CPU 7 and the CPU 8 are managed by the operating system 3). Similarly, one operating system may manage one or more GPUs, one operating system may manage one or more NPUs, one operating system may manage one or more ISPs, or one operating system may manage one or more DSPs.

In an implementation, the functional modules 11 of the first hardware unit 10 may communicate with another hardware unit (such as a second hardware unit 20). For example, the functional modules 11 of the first hardware unit 10 may access the second hardware unit 20.

For example, the functional modules 11 of the first hardware unit 10 may be in a communication connection to the second hardware unit 20 through a bus 30. The bus 30 may specifically be an advanced extensible interface (AXI) bus, which may include five channels, such as:
a read address channel (AR): which is used for transmitting an address for read access;
a read data channel (R): which is used for transmitting data for the read access;
a write address channel (AW): which is used for transmitting an address for write access;
a write data channel (W): which is used for transmitting data for the write access; and
a write response channel (B): which is used for transmitting a response for the write access.

Certainly, buses in accordance with other protocols may also be used, such as an advanced high-performance bus (AHB), an inter-integrated circuit (I2C) bus, and a HyperTransport bus, which are not limited in the embodiments of the present disclosure.

The second hardware unit 20 may include a storage 200, such as a memory, or other hardware units that may communicate with the first hardware unit 10. For example, the second hardware unit 20 may be a DRAM and/or a SRAM. Correspondingly, the bus may be a DRAM bus for the functional module 11 (such as the CPU) in the SoC 100 for accessing the DRAM, or a SRAM bus for accessing the SRAM. Correspondingly, a memory bandwidth refers to a bandwidth of the DRAM bus (DRAM bandwidth for short) and/or a bandwidth of the SRAM bus (SRAM bandwidth for short).

In the embodiments of the present disclosure, the first hardware unit 10 and the second hardware unit 20 may be disposed on different integrated circuits. For example, the first hardware unit 10 may be disposed on the SoC 100, and the second hardware unit 20 may be a DRAM disposed separately with respect to the SoC 100. Alternatively, the first hardware unit 10 and the second hardware unit 20 may be disposed on a same integrated circuit. For example, the first hardware unit 10 may be disposed on the SoC 100, and the second hardware unit 20 may be a SRAM integrated on the SoC.

In an implementation, the second hardware unit 20 may include a plurality of storages 200, where the plurality of storages 200 may be of a same type. For example, the plurality of storages 200 are all DRAMs or are all SRAMs. The plurality of storages 200 may alternatively be of different types. For example, a part of the storages 200 may be DRAMs, and another part of the storages 200 may be SRAMs.

In an implementation, the plurality of storages 200 may all be disposed on the SoC 100. Alternatively, the plurality of storages 200 may all be devices disposed separately with respect to the SoC 100. Alternatively, a part of the storages 200 may be disposed on the SoC 100, and the other part of the storages 200 may be devices disposed separately. This is not specifically limited in the embodiments of the present disclosure.

It should be noted that when the plurality of operating systems run on the first hardware unit 10, each of the operating systems may call the functional module 11 corresponding thereto to implement the corresponding function. Correspondingly, to implement the functions thereof, the functional modules 11 may access the second hardware unit 20 to read instructions and data or to write instruction execution results, and the like. Therefore, the access of the functional modules 11 to the second hardware unit 20 may be described as access of the operating systems corresponding to the functional modules 11 to the second hardware unit 20. For example, when the operating system 1 runs on the CPU 1 and the CPU 2, access of the CPU 1 and the CPU 2 to the DRAM may be described as access of the operating system 1 to the DRAM.

In an implementation, each of the storages 200 of the second hardware unit 20 may have a particular address range, and different storages 200 have different address ranges. Each address range may include a plurality of addresses, and addresses in different address ranges are different. In other words, the plurality of storages 200 are in one-to-one correspondence to a plurality of address ranges, and each of the address ranges may correspond to one of the storages 200.

For example, assuming that the second hardware unit 20 includes a storage 200-1 to a storage 200-N:
an address range 1 of the storage 200-1 may be, for example, 0×1000 to 0×1999;
an address range 2 of the storage 200-2 may be, for example, 0×2000 to 0×2999; and
an address range N of the storage 200-N may be, for example, 0×N000 to 0×N999.

A particular length of data may be stored by each of the addresses. For example, 1 Byte of data may be stored by each of the addresses. In this way, the functional modules 11 may access different storages 200 based on different addresses.

To facilitate subsequent description of the technical solution, in the embodiments of the present disclosure, access of the functional module 11 to an address of the storage 200 may be described as access of the functional module 11 to an address range corresponding to the address. In addition, because the functional module 11 has a correspondence with an operating system, the access of the functional module 11 to an address range may also be described as access of the operating system corresponding to the functional module 11 to the address range.

In an implementation, each of the storages 200 may be allocated to one or more operating systems for use. For example, addresses of a storage 200 may be divided into a plurality of address ranges, and different address ranges are allocated to different operating systems, so that the operating systems may access the address ranges allocated thereto. This may implement allocation of one storage 200 to a plurality of operating systems for use, where each address range may correspond to one operating system.

For example, assuming that the storage 200-2 is allocated to the operating system 1 to the operating system 3 for use:
access addresses of the storage 200-2 may be divided into:
an address range 21: 0×2000 to 0×2299;
an address range 22: 0×2300 to 0×2599; and
an address range 23: 0×2600 to 0×2999.

The address range 21 may be allocated to the operating system 1, the address range 22 may be allocated to the operating system 2, and the address range 23 may be allocated to the operating system 3. In this way, the operating system 1 may access the address range 21, the operating system 2 may access the address range 22, and the operating system 3 may access the address range 23.

In an implementation, when one storage 200 is allocated to a plurality of operating systems for use, a bandwidth resource of the storage 200 may further be allocated to each of the operating systems. For example, assuming that the storage 200-2 includes a bandwidth resource of 100 Gbps, a bandwidth resource of 50 Gbps may be allocated to the operating system 1, a bandwidth resource of 30 Gbps may be allocated to the operating system 2, and a bandwidth resource of 20 Gbps may be allocated to the operating system 3. The bandwidth resource allocated to each of the operating systems may be fixed or dynamically changing.

It should be additionally noted herein that, because the operating system has a correspondence with the address range, in the embodiments of the present disclosure, allocation of a bandwidth resource to the operating system may also be described as allocation of the bandwidth resource to the address range corresponding to the operating system, so as to facilitate subsequent description of the technical solution. For example, the allocation of the bandwidth resource of 50 Gbps to the operating system 1 may be described as allocation of the bandwidth resource of 50 Gbps to the address range 21.

In an embodiment, the bandwidth control system may further include a plurality of bandwidth control modules 40, such as bandwidth control modules 40-1, 40-2, to 40-N. The plurality of bandwidth control modules 40-1, 40-2, to 40-N are in one-to-one correspondence to a plurality of functional modules 11-1, 11-2, to 11-N in the first hardware unit 10. The bandwidth control module 40 may be disposed on a communication link between the functional module 11 corresponding thereto and the second hardware unit 20. For example, the bandwidth control module 40 may be disposed on an outlet side of the functional module 11 corresponding thereto, or in other words, the bandwidth control module 40 is disposed downstream of the functional module 11. In this way, when each of the functional modules 11 accesses the second hardware unit 20, the access (such as an instruction or data) may first pass through the bandwidth control module 40 corresponding to the functional module 11, and is then transmitted to the second hardware unit 20. For example, the access of each of the functional modules 11 may first pass through the bandwidth control module 40, and is then transmitted to the second hardware unit 20 through the bus 30 at downstream of the bandwidth control module 40. Each of the bandwidth control modules 40 is configured to: determine bandwidth levels respectively corresponding to the functional modules 11 in the first hardware unit 10; and control respectively, based on the bandwidth levels respectively corresponding to the functional modules 11, bandwidths for the functional modules 11 for accessing the second hardware unit 20.

In an implementation, each of the bandwidth control modules 40 may correspond to a plurality of functional modules 11. In this case, the bandwidth control module 40 may be disposed on communication links between the plurality of functional modules 11 corresponding thereto and the bus 30. It may be understood that, the fewer the functional modules 11 corresponding to each of the bandwidth control modules 40 are, the finer the granularity of bandwidth control is; and the more the functional modules 11 corresponding to each of the bandwidth control modules 40 are, the coarser the granularity of bandwidth control is. Therefore, in the embodiments of the present disclosure, the correspondence between the bandwidth control modules 40 and the functional modules 11 may be flexibly set according to a granularity requirement of the bandwidth control, which is not limited herein.

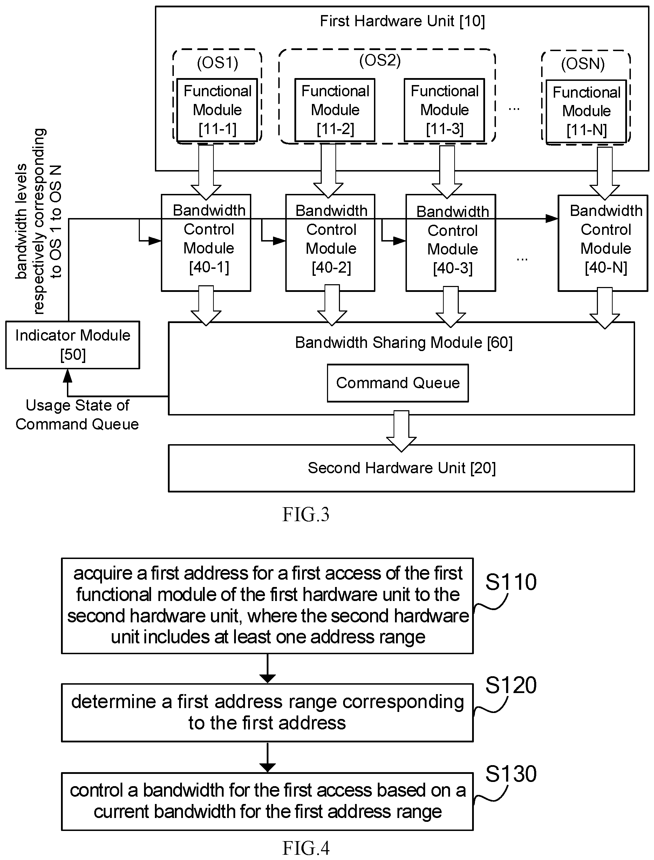

FIG. 3 is a schematic diagram illustrating a structure of a bandwidth control system according to another exemplary embodiment of the present disclosure.

As shown in FIG. 3, in an implementation, the bandwidth control system further includes an indicator module 50. In an example, the indicator module 50 may be a bandwidth allocation module. The indicator module 50 is configured to generate bandwidth levels respectively corresponding to the operating systems.

In an implementation, the indicator module 50 may determine, based on a state of an operating system, such as a state of the operating system accessing the second hardware unit 20, a bandwidth level corresponding to the operating system. The bandwidth level corresponds to a bandwidth resource currently allocated to the operating system. For example, the more the bandwidth resource currently allocated to the operating system is, the higher the bandwidth level currently corresponding to the operating system is; and the fewer the bandwidth resource currently allocated to the operating system is, the lower the bandwidth level currently corresponding to the operating system is.

In an implementation, as shown in FIG. 3, the bandwidth control system may further include a bandwidth sharing module 60. The bandwidth sharing module 60 is located downstream of each of the bandwidth control modules 40 and upstream of the second hardware unit 20. The bandwidth sharing module 60 is in a communication connection to each of the bandwidth control modules 40 and the second hardware unit 20. In this way, the access of each of the functional modules 11 may first go to the bandwidth control module 40 and then transfer to the second hardware unit 20 through the bandwidth sharing module 60.

In an implementation, the bandwidth sharing module 60 has a corresponding register, in which a command queue is stored. The command queue may be used for caching of access commands for the functional modules 11 for accessing the second hardware unit 20, such as a read access command and a write access command.

In an implementation, the indicator module 50 may determine the bandwidth level corresponding to the operating system based on a usage state of the command queue in the bandwidth sharing module 60, such as a crowding level or an idle level. A higher crowding level of the command queue indicates a larger amount of access transmitted by the operating system to the second hardware unit 20 and a lower bandwidth level corresponding to the operating system. A higher idle level of the command queue indicates a smaller amount of access transmitted by the operating system to the second hardware unit 20 and a higher bandwidth level corresponding to the operating system.

In the embodiments of the present disclosure, the bandwidth control module 40 may throttle the access when the access of the functional module 11 passes through the bandwidth control module 40. In this way, a downstream transmission bandwidth for the access may be controlled. In other words, a bandwidth for the functional module 11 for accessing the second hardware unit 20 is controlled.

In an implementation, the bandwidth control module 40 may determine an address range for the access, and control the bandwidth for the access based on the address range for the access. It may be understood that, because the address ranges have a correspondence with the operating systems, the bandwidth control module 40 may control, based on address ranges for the access, bandwidths for functional modules corresponding to different operating systems for accessing the second hardware unit 20.

In another implementation, the bandwidth control module 40 may dynamically control, based on a bandwidth level of an operating system currently corresponding to each of the functional modules 11, a bandwidth for each of the functional modules 11 for accessing the second hardware unit 20, so that the functional module 11 accesses the second hardware unit 20 by a bandwidth resource usable by the corresponding operating system, thereby avoiding congestion in an access process.

It should be noted that, the bandwidth control system shown in FIG. 3 further includes a bus disposed between the bandwidth control module 40 and the second hardware unit 20, which is not shown in the figure.

### Exemplary Method

The present disclosure provides a bandwidth control method, including: determining bandwidth levels respectively corresponding to a plurality of functional modules in a first hardware unit, where the plurality of functional modules respectively correspond to different operating systems; and controlling respectively, based on the bandwidth levels respectively corresponding to the functional modules, bandwidths for the functional modules for accessing a second hardware unit.

In an implementation, different functional modules may be managed by different operating systems, or in other words, different functional modules correspond to different operating systems. Therefore, the determining bandwidth levels respectively corresponding to a plurality of functional modules in a first hardware unit may be: determining bandwidth levels respectively corresponding to a plurality of operating systems managing the plurality of functional modules.

For example, it is assumed that a first functional module is any functional module in the plurality of functional modules, and the first functional module corresponds to a first operating system. Determining a bandwidth level corresponding to the first functional module may be: determining a first bandwidth level corresponding to the first operating system. The determining a first bandwidth level corresponding to the first operating system may be implemented through steps S510 to S520 in a specific embodiment described below, and is not described in detail herein.

In another implementation, different address ranges of the second hardware unit may be allocated to different operating systems, and the different operating systems correspond to different functional modules. In other words, different functional modules correspond to different address ranges of the second hardware unit. Therefore, the determining bandwidth levels respectively corresponding to a plurality of functional modules may be: determining bandwidth levels respectively corresponding to the plurality of functional modules for accessing a plurality of address ranges of the second hardware unit.

In a specific embodiment, the controlling respectively, based on the bandwidth levels respectively corresponding to the functional modules, bandwidths for the functional modules for accessing a second hardware unit includes: determining, based on the bandwidth levels respectively corresponding to the functional modules, bandwidth thresholds respectively corresponding to the functional modules; and controlling respectively, based on the bandwidth thresholds respectively corresponding to the functional modules, the bandwidths for the functional modules for accessing the second hardware unit.

In an implementation, when different operating systems correspond to different functional modules, the determining bandwidth thresholds respectively corresponding to the functional modules may be: determining bandwidth thresholds respectively corresponding to a plurality of operating systems managing the plurality of functional modules.

For example, it is assumed that a first functional module is any functional module in the plurality of functional modules, and the first functional module corresponds to a first operating system. Determining a bandwidth threshold corresponding to the first functional module based on a bandwidth level corresponding to the first functional module may be: determining a first bandwidth threshold corresponding to a first operating system based on a first bandwidth level corresponding to the first operating system. The determining a first bandwidth threshold corresponding to a first operating system based on a first bandwidth level corresponding to the first operating system may be implemented through step S531 in an embodiment described below, and is not described in detail herein.

In an implementation, when different functional modules correspond to different address ranges of the second hardware unit, the determining bandwidth thresholds respectively corresponding to the functional modules may be: determining bandwidth thresholds respectively corresponding to the different address ranges of the second hardware unit.

For example, assuming that a first functional module is any functional module in the plurality of functional modules, and the first functional module accesses a first address range of the second hardware unit, determining a bandwidth threshold corresponding to the first functional module based on a bandwidth level corresponding to the first functional module may be: determining a first bandwidth threshold corresponding to the first address range based on a bandwidth level corresponding to the first address range. The determining a first bandwidth threshold corresponding to the first address range based on a bandwidth level corresponding to the first address range may be implemented through step S1312 in an embodiment described below, and is not described in detail herein.

In a specific embodiment, the determining bandwidth levels respectively corresponding to a plurality of functional modules in a first hardware unit includes: determining address ranges respectively corresponding to the functional modules for accessing the second hardware unit; and determining, based on the address ranges respectively corresponding to the functional modules for accessing the second hardware unit, the bandwidth levels respectively corresponding to the functional modules.

For example, assuming that a first functional module accesses a first address range of the second hardware unit, determining a bandwidth level corresponding to the first functional module based on the first address range may be implemented based on step S1311 in an embodiment described below, and is not described in detail herein.

In a specific embodiment, the determining address ranges respectively corresponding to the functional modules for accessing the second hardware unit includes: determining access addresses respectively corresponding to the functional modules for accessing the second hardware unit; and determining, based on the access addresses respectively corresponding to the functional modules for accessing the second hardware unit, the address ranges respectively corresponding to the functional modules for accessing the second hardware unit.

For example, assuming that a first functional module accesses the second hardware unit, determining an address for the first functional module for accessing the second hardware unit may be implemented through step S110 in a subsequent embodiment. Determining, based on the address corresponding to the first functional module for accessing the second hardware unit, a first address range corresponding to the first functional module for accessing the second hardware unit may be implemented through step S120 in a subsequent embodiment, and is not described in detail herein.

In a specific embodiment, the controlling respectively, based on the bandwidth thresholds respectively corresponding to the functional modules, the bandwidths for the functional modules for accessing the second hardware unit includes: controlling respectively, based on the bandwidth thresholds respectively corresponding to the functional modules and current bandwidths of the address ranges, the bandwidths for the functional modules for accessing the second hardware unit.

For example, assuming that a first functional module accesses a first address range of the second hardware unit, controlling, based on a bandwidth threshold corresponding to the first functional module, a bandwidth for the first functional module for accessing the second hardware unit may be implemented through step S132 in an embodiment described below, and is not described in detail herein.

In a specific embodiment, the controlling respectively, based on the bandwidth thresholds respectively corresponding to the functional modules and current bandwidths of the address ranges, the bandwidths for the functional modules for accessing the second hardware unit includes: determining values of the bandwidth thresholds respectively corresponding to the functional modules and values of the current bandwidths of the address ranges for the functional modules for accessing the second hardware unit; and controlling respectively, based on the values of the bandwidth thresholds respectively corresponding to the functional modules and the values of the current bandwidths of the address ranges for the functional modules for accessing the second hardware unit, the bandwidths for the functional modules for accessing the second hardware unit.

In a specific embodiment, the controlling respectively, based on the values of the bandwidth thresholds respectively corresponding to the functional modules and the values of the current bandwidths of the address ranges for the functional modules for accessing the second hardware unit, the bandwidths for the functional modules for accessing the second hardware unit includes: transmitting, in response to a current bandwidth for an address range for any first functional module in the functional modules for accessing the second hardware unit being less than a bandwidth threshold corresponding to the first functional module, the access of the first functional module to the second hardware unit; or blocking, in response to a current bandwidth for an address range for any first functional module in the functional modules for accessing the second hardware unit being greater than or equal to a bandwidth threshold corresponding to the first functional module, the access of the first functional module to the second hardware unit.

For example, it is assumed that the first functional module corresponds to a first bandwidth threshold, and the first hardware unit accesses a first address range of the second hardware unit. If a current bandwidth for the first address range is less than the first bandwidth threshold, access of the first functional module to the first address range of the second hardware unit is transmitted. If the current bandwidth for the first address range is greater than or equal to the first bandwidth threshold, the access of the first functional module to the first address range of the second hardware unit is blocked.

In a specific embodiment, the controlling respectively, based on the bandwidth thresholds respectively corresponding to the functional modules, the bandwidths for the functional modules for accessing the second hardware unit includes: controlling the bandwidths for the functional modules for accessing the second hardware unit to be less than the bandwidth thresholds respectively corresponding to the functional modules.

For example, assuming that a first functional module corresponds to a first bandwidth threshold, controlling, based on the first bandwidth threshold corresponding to the first functional module, a bandwidth for the first functional module for accessing the second hardware unit may be implemented through step S532 in an embodiment described below, and is not described in detail herein.

According to the method provided in the embodiments of the present disclosure, when different operating systems run on the plurality of functional modules in the first hardware unit, respectively, the bandwidth levels respectively corresponding to the plurality of functional modules in the first hardware unit are determined, and the bandwidths for the functional modules for accessing the second hardware unit are controlled respectively based on the bandwidth levels respectively corresponding to the functional modules, so that the bandwidths for the functional modules corresponding to the operating systems for accessing the second hardware unit are caused to respectively match bandwidth resources available to the operating systems, thereby reducing access delay, reducing data waiting, and improving operating efficiency of a processor and performance of the operating systems.

A plurality of embodiments of the present disclosure are described below with reference to the accompanying drawings. In some embodiments, the steps of the bandwidth control method provided in the present disclosure may be performed by any bandwidth control module 40 in the bandwidth control system. For ease of description, in the following embodiments, the any bandwidth control module 40 in the bandwidth control system is referred to as a first control module, and any functional module 11 in a communication connection to the first control module is referred to as a first functional module.

FIG. 4 is a flowchart illustrating a bandwidth control method according to an exemplary embodiment of the present disclosure.

In an embodiment, when different functional modules correspond to different address ranges, the bandwidth control method may include the following steps:
Step S110: Acquire a first address for first access of the first functional module of the first hardware unit 10 to the second hardware unit 20, where the second hardware unit 20 includes at least one address range

In a scenario in which a plurality of operating systems run on the first hardware unit 10, the address ranges of the second hardware unit 20 may be allocated to the plurality of operating systems for use, where each of the operating systems may acquire at least one address range. Each of the address ranges may correspond to one storage 200, and may also correspond to one operating system.

For example, it is assumed that the second hardware unit 20 includes a storage 200-1 to a storage 200-3:
Assuming that an address range 1 of the storage 200-1 is 0×1000 to 0×1999, if the address range 1 is allocated to an operating system 1 for use, the address range 1 corresponds to the operating system 1, or in other words, the address range 1 corresponds to the storage 200-1.

Assuming that an address range 2 of the storage 200-2 is 0×2000 to 0×2999, if the address range 2 is further divided into an address range 21 (for example: 0×2000 to 0×2299), an address range 22 (for example: 0×2300 to 0×2599), and an address range 23 (0×2600 to 0×2999), where the address range 21 is allocated to the operating system 1 for use, the address range 22 is allocated to an operating system 2 for use, and the address range 23 is allocated to an operating system 3 for use. In this case, the address range 21 corresponds to the operating system 1, the address range 22 corresponds to the operating system 2, and the address range 23 corresponds to the operating system 3.

Assuming that an address range 3 of the storage 200-3 is 0×3000 to 0×3999, if the address range 3 is further divided into an address range 31 (for example: 0×3000 to 0×3499) and an address range 32 (for example: 0×3500 to 0×3599), where the address range 31 is allocated to the operating system 1 for use, and the address range 32 is allocated to the operating system 3 for use. In this case, the address range 31 corresponds to the operating system 1, and the address range 32 corresponds to the operating system 3.

When any operating system runs on or manages the first functional module, the first functional module may access the second hardware unit 20. For example, the first functional module may access any address range allocated to the operating system. In the embodiments of the present disclosure, for ease of description, the access of the first functional module to the second hardware unit 20 may be referred to as a first access, and an access address for the first access may be referred to as a first address.

It should be noted that the operating system running on the first functional module may be fixed or dynamically changing. Because different operating systems corresponding to different address ranges, when different operating systems run on the first functional module, the first address may fall within different address ranges.

For example, when the operating system 1 runs on the first functional module, the first functional module may access the address range 1 of the storage 200-1, the address range 21 of the storage 200-2, and the address range 31 of the storage 200-3. In this case, the first address may fall within the address range 1. For example: the first address may be 0×1001. Alternatively, the first address may fall within the address range 21. For example: the first address may be 0×2001. Alternatively, the first address may fall within the address range 31. For example: the first address may be 0×3001.

For example, when the operating system 2 runs on the first functional module, the first functional module may access the address range 22 of the storage 200-2. In this case, the first address may fall within the address range 22. For example: the first address may be 0×2301.

In an implementation, the first control module may acquire the first address from an address channel of the bus. For example: if the first access is a read access, the first control module may acquire the first address from the read address channel of the bus, or if the first access is a write access, the first control module may acquire the first address from the write address channel of the bus.

Step S120: Determine a first address range corresponding to the first address.

It may be understood that, when the second hardware unit 20 includes a plurality of storages 200, or the storages 200 in the second hardware unit 20 are allocated to a plurality of operating systems for use, the second hardware unit 20 may include a plurality of address ranges. In this case, in an implementation, the first address may be matched against the plurality of address ranges respectively, to determine the first address range corresponding to the first address.

Table 1 exemplarily illustrates a correspondence between the plurality of storages 200 of the second hardware unit 20, the plurality of address ranges, and the plurality of operating systems by using an example in which the second hardware unit 20 includes the storage 200-1 to the storage 200-3:

**Table 1**

| Second Hardware Unit | Storage | Address Range | Operating System |
|---|---|---|---|
| | Storage 200-1 | Address Range 1: 0×1000 to 0×1999 | OS 1 |
| | Storage 200-2 | Address Range 21: 0×2000 to 0×2299 | OS 1 |
| | | Address Range 22: 0×2300 to 0×2599 | OS 2 |
| | | Address Range 23: 0×2600 to 0×2999 | OS 3 |
| | Storage 200-3 | Address Range 31: 0×3000 to 0×3499 | OS 1 |
| | | Address Range 32: 0×3500 to 0×3599 | OS 3 |

With reference to Table 1, for example, if the first address is 0×1500, the corresponding first address range is the address range 1; if the first address is 0×2500, the corresponding first address range is the address range 22; and if the first address is 0×3600, the corresponding first address range is the address range 32.

Step S130: Control a bandwidth for the first access based on a current bandwidth for the first address range.

The controlling a bandwidth for the first access may also be referred to as controlling the first access, or performing transmission control on the first access, or the like. A manner of controlling the bandwidth for the first access includes, but is not limited to, transmitting the first access or blocking the first access.

The current bandwidth for the first address range may be an amount of data transmitted for the first address range per unit time at a current time or in a current period of time (for example, at least one current clock cycle), or a throughput for the first address range per unit time, where units of the current bandwidth may be, for example, bps, Kbps, Mbps, Gbps or the like.

For example, if the clock cycle is 1 ms, and an amount of data transmitted for the first address range within one clock cycle is 1 Gb, the current bandwidth for the first address range is 1000 Gbps.

Alternatively, the current bandwidth for the first address range may be described as a total bandwidth for the functional modules 11 for accessing the first address range at a current time or in a current period of time.

For example, within at least one current clock cycle, three of the functional modules 11 access addresses within the first address range, by bandwidths of 10 Gbps, 15 Gbps, 20 Gbps, respectively. In this case, the current bandwidth for the first address range is 45 Gbps.

Because each address range has a corresponding bandwidth resource, a usage state of a bandwidth resource for the first address range may be determined based on the current bandwidth for the first address range. For example, it may be determined whether there is an idle bandwidth resource in the first address range. Thus, the bandwidth for the first access may be controlled. For example, if there is an idle bandwidth resource for the first address range, the first access may be transmitted, or if there is no idle bandwidth resource for the first address range, the first access may be blocked.

According to the method provided in the embodiments of the present disclosure, the first address range corresponding to the first address of the first access is determined, and the bandwidth for the first access is controlled based on the current bandwidth for the first address range by using the correspondence between address ranges and operating systems, so that a bandwidth for an operating system corresponding to the first address range for accessing the second hardware unit 20 may be controlled to cause the bandwidth for the operating system for accessing the second hardware unit 20 to match the bandwidth resource to the operating system, thereby reducing access delay, reducing data waiting, and improving operating efficiency of a processor and performance of the operating system.

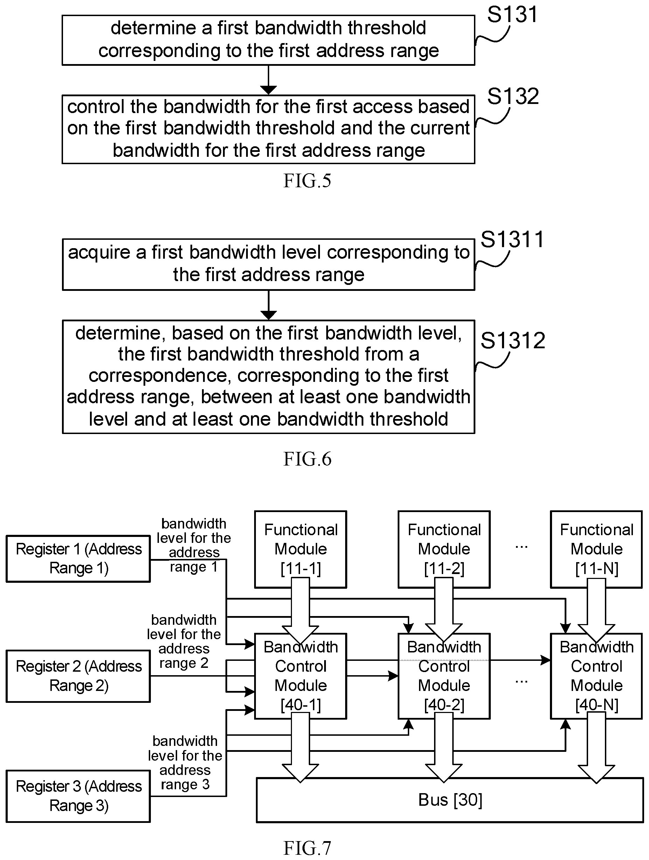

FIG. 5 is a flowchart illustrating step S130 of a bandwidth control method according to an exemplary embodiment of the present disclosure.

As shown in FIG. 5, in an embodiment, step S130 may include steps S131 to S132.

Step S131: Determine a first bandwidth threshold corresponding to the first address range.

The first bandwidth threshold may be a maximum bandwidth allowed for the operating system corresponding to the first address range to access the first address range.

In an implementation, the first bandwidth threshold corresponding to the first address range may be less than or equal to the bandwidth resource corresponding to the first address range. It may be understood that, because bandwidth resources corresponding to different address ranges may be the same or different, first bandwidth thresholds corresponding to different address ranges may also be the same or different.

For example, assuming that the first address range is an address range 1, if the bandwidth resource corresponding to the first address range is 50 Gbps, the first bandwidth threshold may be 50 Gbps, 45 Gbps, or the like.

It may be understood that, the bandwidth resources corresponding to the address ranges may be fixed or dynamically changing. Therefore, when a bandwidth resource corresponding to an address range changes, a first bandwidth threshold corresponding to the address range may also change. In other words, for any address range, a first bandwidth threshold corresponding thereto may be a fixed value or a dynamically changing value.

Step S132: Control the bandwidth for the first access based on the first bandwidth threshold and the current bandwidth for the first address range.

In an implementation, values of the first bandwidth threshold and the current bandwidth for the first address range may be compared. When the current bandwidth for the first address range is less than the first bandwidth threshold, it indicates that there is an idle bandwidth resource for the first address range; therefore, the first access may be transmitted. When the current bandwidth for the first address range is greater than or equal to the first bandwidth threshold, it indicates that there is no idle bandwidth resource for the first address range; therefore, the first access may be blocked.

For example, assuming that the first bandwidth threshold is 50 Gbps, if the current bandwidth for the first address range is 45 Gbps, it indicates that there is an idle bandwidth resource for the first address range for transmitting the first access. In this case, the first control module transmits the first access to the bus 30 at downstream, so that the first access is transmitted to the first address through the bus 30 at downstream.

For example, assuming that the first bandwidth threshold is 50 Gbps, if the current bandwidth for the first address range is 55 Gbps, it indicates that there is no idle bandwidth resource for the first address range for transmitting the first access. In this case, the first control module may block the first access, so that the first access is not transmitted to the bus 30 at downstream. Thereafter, if the current bandwidth for the first address range is less than 50 Gbps, the first control module may transmit the first access, so that the first access is transmitted to the first address through the bus 30 at downstream.

According to the method provided in the embodiments of the present disclosure, the bandwidth for the first access is controlled based on the first bandwidth threshold corresponding to the first address range and the current bandwidth for the first address range, so that the first access is transmitted downstream when there is an idle resources for the first address range, or is blocked when there is no idle resources for the first address range, and bandwidths for the operating systems for accessing the first address range is caused to match the bandwidth resource corresponding to the first address range.

FIG. 6 is a flowchart illustrating step S131 of a bandwidth control method according to an exemplary embodiment of the present disclosure.

As shown in FIG. 6, in an embodiment, step S131 may include steps S1311 to S1312.

Step S1311: Acquire a first bandwidth level corresponding to the first address range.

In an implementation, a bandwidth level may be preconfigured for each address range.

Each address range may include at least one selectable bandwidth level, also referred to as a bandwidth level indicator, bandwidth indication information, or the like, which is not specifically limited herein. Bandwidth levels of different address ranges may be the same or different. During specific configuration, the bandwidth levels of the address ranges may be determined appropriately based on factors such as the bandwidth resources corresponding to the address ranges. It may be understood that, the bandwidth levels corresponding to the address ranges may be fixed or dynamically changing. For example, if a bandwidth resource allocated to an address range changes, a bandwidth level corresponding to the address range may also change correspondingly.

In an implementation, the bandwidth levels corresponding to the address ranges may be configured in a register. In this way, the first control module may read the bandwidth levels corresponding to the address ranges from the register, and determine, based on the read information, the first bandwidth level corresponding to the first address range.

For example, five selectable bandwidth levels, for example, bandwidth levels 1 to 5, may be set for an address range, and different bandwidth levels may be denoted by different values (for example, 1 to 5) in the register. The bandwidth level 1 may be a lowest level, the bandwidth level 2 may be a lower level, the bandwidth level 3 may be a medium level, the bandwidth level 4 may be a higher level, and the bandwidth level 5 may be a highest level. Numbers of selectable bandwidth levels for different address ranges may be the same or different, which is not specifically limited herein.

Table 2 exemplarily illustrates bandwidth levels corresponding to a plurality of address ranges. It should be noted that, values shown in Table 2 are only examples, and do not constitute specific limitations on the embodiments of the present disclosure.

**Table 2**

| Address Range | Bandwidth Level |
|---|---|
| Address Range 1: 0×1000 to 0×1999 | Bandwidth Level 1 |
| Address Range 21: 0×2000 to 0×2299 | Bandwidth Level 5 |
| Address Range 22: 0×2300 to 0×2599 | Bandwidth Level 3 |
| Address Range 23: 0×2600 to 0×2999 | Bandwidth Level 2 |
| Address Range 31: 0×3000 to 0×3499 | Bandwidth Level 4 |
| Address Range 32: 0×3500 to 0×3599 | Bandwidth Level 3 |

In other words, if the first address range is the address range 1, the first control module may determine, based on Table 2, that the first bandwidth level corresponding to the first address range is the bandwidth level 1.

FIG. 7 is a schematic diagram illustrating that a bandwidth control module 40 acquires a bandwidth level according to an embodiment of the present disclosure.

As shown in FIG. 7, in an implementation, the integrated circuit, such as the SoC 100, may include a plurality of registers whose number corresponds to a number of address ranges. Each of the registers is configured to store a bandwidth level corresponding to an address range. For example, a register 1 stores a bandwidth level corresponding to an address range 1, a register 2 stores a bandwidth level corresponding to an address range 2, and a register 3 stores a bandwidth level corresponding to an address range 3. The bandwidth control modules 40, for example, the bandwidth control module 40-1 to the bandwidth control module 40-N, may read the bandwidth level in each of the registers.

In an implementation, the bandwidth levels corresponding to the plurality of address ranges may alternatively be stored in a same register, so that the number of registers may be reduced, thereby reducing hardware complexity of the integrated circuit.

In an implementation, the bandwidth control module 40 may read the bandwidth level in each of the registers when receiving access from the functional module 11. Alternatively, the bandwidth control module 40 may periodically read the bandwidth level in each of the registers. For example, a timer may be configured for the bandwidth control module 40, and the timer times out periodically by a preset interval. The bandwidth control module 40 may read the bandwidth level in each of the registers in response to a timeout signal of the timer.

Step S1312: Determine, based on the first bandwidth level, the first bandwidth threshold from a correspondence, corresponding to the first address range, between at least one bandwidth level and at least one bandwidth threshold.

In an implementation, a correspondence between at least one bandwidth level and at least one bandwidth threshold may be separately set for each address range, where each bandwidth level may correspond to a bandwidth threshold. For a same address range, bandwidth thresholds corresponding to different bandwidth levels are different.

In an implementation, a correspondence, corresponding to each address range, between at least one bandwidth level and at least one bandwidth threshold may be stored in the register. In this way, when the first bandwidth level corresponding to the first address range is acquired, a bandwidth threshold corresponding to the first bandwidth level may be found by index in the correspondence, corresponding to the first address range, between at least one bandwidth level and at least one bandwidth threshold, and the found bandwidth threshold is the first bandwidth threshold corresponding to the first address range.

For example, a correspondence, corresponding to the address range 1, between at least one bandwidth level and at least one bandwidth threshold is shown in Table 3. It should be noted that, values shown in Table 3 are only examples, and do not constitute specific limitations on the embodiments of the present disclosure.

**Table 3**

| Address Range 1 | |
|---|---|
| Bandwidth Level | Bandwidth Threshold |
| Bandwidth Level 1 | 60 Gbps |
| Bandwidth Level 2 | 70 Gbps |
| Bandwidth Level 3 | 80 Gbps |
| Bandwidth Level 4 | 90 Gbps |
| Bandwidth Level 5 | 100 Gbps |

Based on Table 3, if the first address range is the address range 1, and the first bandwidth level is the bandwidth level 1, it may be found by index that a bandwidth threshold corresponding to the bandwidth level 1 is 60 Gbps. Therefore, it may be determined that a first bandwidth threshold corresponding to the address range 1 is 60 Gbps. In this case, when a current bandwidth for the address range 1 is less than 60 Gbps, the first control module transmits the first access; or when a current bandwidth for the address range 1 is greater than or equal to 60 Gbps, the first control module blocks the first access.

As a comparison, if the first address range is the address range 1, and the first bandwidth level is the bandwidth level 4, it may be found by index that a bandwidth threshold corresponding to the bandwidth level 4 is 90 Gbps. Therefore, it may be determined that a first bandwidth threshold corresponding to the address range 1 is 90 Gbps. In this case, when a current bandwidth for the address range 1 is less than 90 Gbps, the first control module transmits the first access; or when a current bandwidth for the address range 1 is greater than or equal to 90 Gbps, the first control module blocks the first access.

It may be learned that, for any address range, bandwidths for the operating systems for accessing the address range may be controlled by adjusting a first bandwidth level corresponding to the address range.

It should be additionally noted herein that, because each bandwidth level corresponds to one bandwidth threshold, for any address range, a bandwidth threshold corresponding thereto may be determined based on a bandwidth level corresponding thereto. In other words, the bandwidth level has a function of indicating the bandwidth threshold. In some implementations, in addition to the bandwidth level, other information, such as a flag bit or a register address storing a bandwidth threshold, may also be used to indicate the bandwidth threshold, which is not limited in the embodiments of the present disclosure.

It may be understood that, because bandwidth resources corresponding to different address ranges may be the same or different, at a same bandwidth level, bandwidth thresholds corresponding to different address ranges may be the same or different.

Table 4 illustrates a case in which bandwidth thresholds corresponding to different address ranges are the same or different at a same bandwidth level. It should be noted that, values shown in Table 4 are only examples, and do not constitute specific limitations on the embodiments of the present disclosure.

**Table 4**

| | Bandwidth Threshold | | |
|---|---|---|---|
| Bandwidth Level | Address Range 1 | Address Range 21 | Address Range 22 |
| Bandwidth Level 1 | 60 Gbps | 10 Gbps | 10 Gbps |
| Bandwidth Level 2 | 70 Gbps | 20 Gbps | 20 Gbps |
| Bandwidth Level 3 | 80 Gbps | 30 Gbps | 30 Gbps |
| Bandwidth Level 4 | 90 Gbps | 40 Gbps | 40 Gbps |
| Bandwidth Level 5 | 100 Gbps | 50 Gbps | 50 Gbps |

Based on Table 4, if first bandwidth levels corresponding to the address range 1 and the address range 21 are both the bandwidth level 1, a first bandwidth threshold corresponding to the address range 1 is 60 Gbps, and a first bandwidth threshold corresponding to the address range 21 is 10 Gbps. Therefore, if a current bandwidth for the address range 1 is equal to 30 Gbps, access to the address range 1 is transmitted to the bus 30 at downstream. As a comparison, if the current bandwidth for the address range 21 is equal to 30 Gbps, the access to the address range 21 is blocked.

It may be learned that, for different address ranges, a same bandwidth level may correspond to different first bandwidth thresholds, thereby achieving differentiated control of bandwidths for the operating systems for accessing the different address ranges.

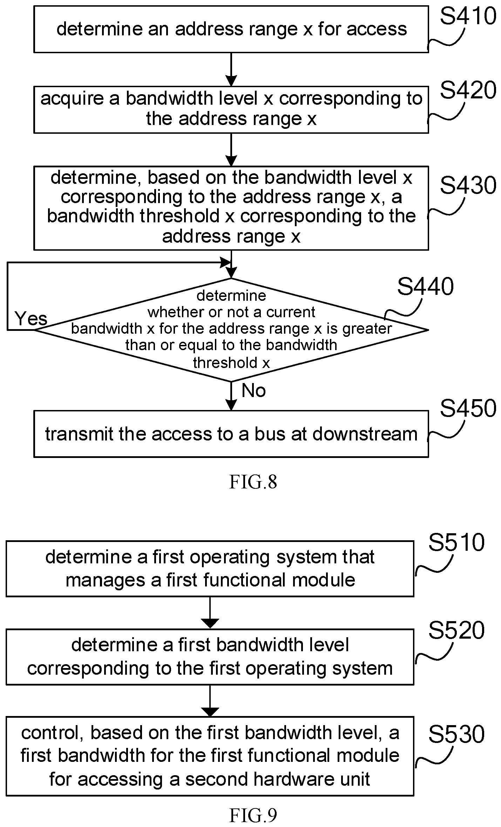

FIG. 8 is another flowchart illustrating a bandwidth control method according to an exemplary embodiment of the present disclosure.

In an embodiment, the method may be performed by any bandwidth control module 40 in the bandwidth control system. As shown in FIG. 8, the method may include the following steps:
Step S410: Determine an address range x for the access when access transmitted by a functional module 11-x is received.

For example, the address range x for the access may be determined based on step S110 and step S120.

Step S420: Acquire a bandwidth level x corresponding to the address range x.

For example, the bandwidth level x corresponding to the address range x may be acquired based on step S1311.

Step S430: Determine, based on the bandwidth level x corresponding to the address range x, a bandwidth threshold x corresponding to the address range x.

For example, the bandwidth threshold x corresponding to the address range x may be determined based on step S1312.

Step S440: Determine whether or not a current bandwidth x for the address range x is greater than or equal to the bandwidth threshold x.

If the current bandwidth x is greater than or equal to the bandwidth threshold x, a bandwidth control module 40-x may block the access. If the current bandwidth x is less than the bandwidth threshold x, the bandwidth control module 40-x may perform step S450 to transmit the access to the bus 30 at downstream.

Because different bandwidth control modules 40 correspond to different functional modules 11, and different functional modules 11 may correspond to different operating systems, when the plurality of bandwidth control modules 40 perform in parallel the method provided in the embodiments of the present disclosure, bandwidths for the plurality of operating systems for accessing the second hardware unit 20 may be controlled simultaneously, so that the bandwidths for the operating systems for accessing the second hardware unit 20 match bandwidth resources acquired by the operating systems.

FIG. 9 is a schematic flowchart illustrating a bandwidth control method according to another exemplary embodiment of the present disclosure.

In an embodiment, when different functional modules correspond to different operating systems, the bandwidth control method may include the following steps:
Step S510: Determine a first operating system that manages the first functional module.

In an implementation, after the first operating system calls the first functional module, the first functional module generates a logical address. A memory management unit (MMU) may map the logical address generated by the first functional module to a physical address of the second hardware unit 20, where the physical address is a physical address corresponding to the first operating system.

In an implementation, the first control module may perform mapping to the physical address of the second hardware unit 20 based on the logical address of the first functional module, and determine, based on the physical address, the first operating system that manages the first functional module.

Certainly, the first control module may determine, in other manners, the first operating system corresponding to the first functional module, for example, an MMU transmits an ID of the first operating system corresponding to the first functional module to the first control module, or the like, which is not limited in the embodiments of the present disclosure.

Step S520: Determine a first bandwidth level corresponding to the first operating system.

The first bandwidth level may represent a bus bandwidth allocated to the first operating system. For example, the higher the bus bandwidth allocated to the first operating system is, the higher the first bandwidth level corresponding to the first operating system is; the lower the bus bandwidth allocated to the first operating system is, the lower the first bandwidth level corresponding to the first operating system.

In an implementation, the indicator module 50 may determine the bandwidth level corresponding to the operating system based on a usage state of the command queue in the bandwidth sharing module 60.

The usage state of the command queue may include any parameter value or indication information that may represent an idle/crowding level of the command queue.

In an implementation, the usage state of the command queue may include a first state value, where the first state value may represent the idle/crowding level of the command queue. The command queue may include a plurality of entries, in each of which one access command may be cached, for example, a read entry for caching a read access command and a write entry for caching a write access command. An entry in which an access command has been cached is an unavailable entry, and an entry in which no access command has been cached is an available entry.

For example, assuming that the command queue includes 10 entries, if eight entries have instructions cached therein, a number of available entries in the command queue is 2, and a number of unavailable entries is 8; or if two entries have instructions cached therein, a number of available entries in the command queue is 8, and a number of unavailable entries is 2.

In an implementation, the first state value may include a number of available entries (also referred to as a number of idle entries) or a number of unavailable entries (also referred to as a number of non-idle entries) in the command queue.

It may be understood that, when the first state value of the command queue includes the number of available entries in the command queue, a larger first state value indicates a higher idle level of the command queue and more idle bandwidth resources for the second hardware unit 20, while a smaller first state value indicates a higher crowding level of the command queue and fewer idle bandwidth resources for the second hardware unit 20. When the first state value of the command queue includes the number of unavailable entries in the command queue, a larger first state value indicates a higher crowding level of the command queue and fewer idle bandwidth resources for the second hardware unit 20, while a smaller first state value indicates a higher idle level of the command queue and more idle bandwidth resources for the second hardware unit 20.

In an implementation, the bandwidth sharing module 60 may periodically transmit the first state value of the command queue to the indicator module 50. Alternatively, the bandwidth sharing module 60 may transmit the first state value of the command queue to the indicator module 50 when it is monitored that a command enters or leaves the command queue. The first state value includes a latest number of available entries or unavailable entries in the command queue.

In an implementation, at least one bandwidth level may be preset for each operating system, and a correspondence between the first state value of the command queue and each bandwidth level of the operating system may be preset.

It should be noted that in a scenario of a plurality of operating systems, services of different operating systems may be different, and bandwidth requirements for the second hardware unit 20 may also be different. Therefore, for a same first state value, bandwidth levels corresponding to the operating systems may be the same or different, which may be specifically set appropriately based on service requirements of the operating systems and is not specifically limited herein.

In an implementation, different first state values correspond to different bandwidth levels. For example, the command queue includes 10 entries, and the first state value, such as the number of available entries, may be 10. Correspondingly, the 10 first state values correspond to 10 bandwidth levels. For example, when the number of available entries is 10, the corresponding bandwidth level is 1, and when the number of available entries is 9, the corresponding bandwidth level is 2.

In an implementation, different state value ranges correspond to different bandwidth levels. The first state values are divided into a plurality of state value ranges, where each of the state value ranges includes at least one first state value and corresponds to one bandwidth level.

For example, assuming that the command queue includes 10 entries, and the first state value includes the number of available entries, a correspondence between state value ranges and bandwidth levels of operating systems may be shown in Table 5. It should be noted that, values shown in Table 5 are only examples, and do not constitute specific limitations on the embodiments of the present disclosure.

**Table 5**

| Number of Available Entries | Bandwidth Level of OS 1 | Bandwidth Level of OS 2 | Bandwidth Level of OS 3 |
|---|---|---|---|
| 10 | 1 | 1 | 1 |
| 9 | 1 | 1 | 1 |
| 8 | 1 | 1 | 2 |
| 7 | 1 | 2 | 2 |
| 6 | 1 | 2 | 3 |
| 5 | 2 | 2 | 3 |
| 4 | 2 | 3 | 4 |
| 3 | 2 | 3 | 4 |
| 2 | 2 | 3 | 5 |
| 1 | 2 | 3 | 5 |

As shown in Table 5, bandwidth levels corresponding to the operating system 1 include 1 and 2, corresponding to state value ranges of 6 to 10 available entries and 1 to 5 available entries, respectively. Bandwidth levels corresponding to the operating system 2 include 1 to 3, corresponding to state value ranges of 8 to 10 available entries, 5 to 7 available entries, and 1 to 4 available entries, respectively. Bandwidth levels corresponding to the operating system 3 include 1 to 5, corresponding to state value ranges 9 to 10 available entries, 7 to 8 available entries, 5 to 6 available entries, 3 to 4 available entries, and 1 to 2 available entries, respectively.

In this way, the indicator module 50 may determine, based on the first state value transmitted by the bandwidth sharing module 60, the bandwidth level corresponding to the received first state value among the plurality of bandwidth levels corresponding to the operating systems.

For example, if the number of available entries included in the first state value is 6, the indicator module 50 may determine that the bandwidth level corresponding to the operating system 1 is 1, the bandwidth level corresponding to the operating system 2 is 2, and the bandwidth level corresponding to the operating system 3 is 3.

For example, the correspondence between the bandwidth levels of the operating systems and the first state values may be stored in a register corresponding to the indicator module 50.

In an implementation, after determining the bandwidth levels respectively corresponding to the operating systems, the indicator module 50 may write the bandwidth levels respectively corresponding to the operating systems into the corresponding register. In an example, the indicator module 50 may generate corresponding bandwidth level indicators based on the bandwidth levels respectively corresponding to the operating systems, and write the bandwidth level indicators into the corresponding register. The indicator module 50 may generate one bandwidth level indicator, which is used for indicating the bandwidth levels corresponding to the operating systems. Alternatively, the indicator module 50 may generate a plurality of bandwidth level indicators, each of which correspondingly indicates a bandwidth level corresponding to an operating system.

In an implementation, the first control module may read, from the register corresponding to the indicator module 50, the bandwidth levels respectively corresponding to the operating systems.

In an implementation, the first control module may read the bandwidth level indicator from the register corresponding to the indicator module 50, and determine, based on the bandwidth level indicator, the bandwidth levels respectively corresponding to the operating systems.

In an implementation, the first control module may periodically read, from the register corresponding to the indicator module 50, the bandwidth levels corresponding to the operating systems.

In an implementation, the indicator module 50 may transmit a read instruction to the first control module after writing the bandwidth levels of the operating systems into the register. The first control module may read, based on the read instruction, the bandwidth levels corresponding to the operating systems from the register corresponding to the indicator module 50.

In an implementation, the first control module may determine, based on the acquired bandwidth levels respectively corresponding to the operating systems, the first bandwidth level corresponding to the first operating system. For example, assuming that the first control module acquires a bandwidth level of 1 corresponding to the operating system 1, a bandwidth level of 2 corresponding to the operating system 2, and a bandwidth level of 1 corresponding to the operating system 3, if the first operating system is the operating system 1, the first control module may determine that a bandwidth level corresponding to the first operating system is 1.

Step S530: Control, based on the first bandwidth level, a first bandwidth for the first functional module for accessing the second hardware unit.

The first bandwidth is a bandwidth for the first functional module for accessing the second hardware unit 20.

In an implementation, when the access of the first functional module to the second hardware unit 20 passes through the first control module, the first control module may throttle the access based on the first bandwidth level corresponding to the first operating system, so as to control the first bandwidth for the first functional module for accessing the second hardware unit 20.

It may be learned from the foregoing technical solution that, according to the method provided in the embodiments of the present disclosure, all the functional modules 11 corresponding to the operating systems may be throttled based on the bandwidth levels corresponding to the operating systems, thereby avoiding congestion in the access of the functional modules 11 to the second hardware unit 20.

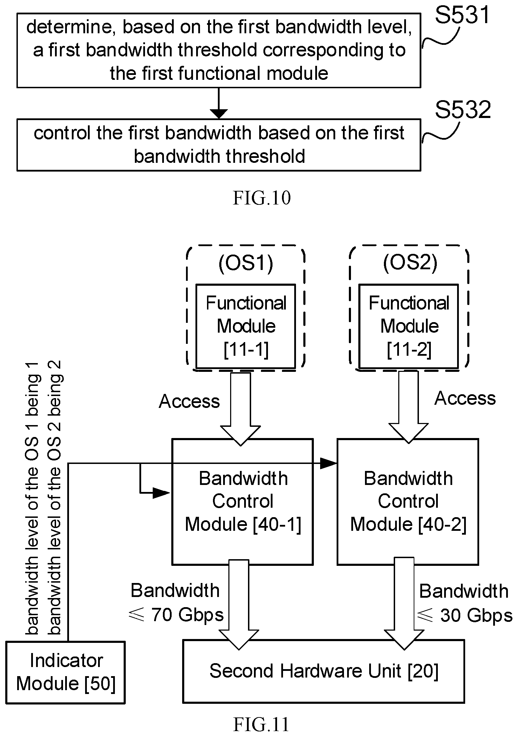

FIG. 10 is a flowchart illustrating step S530 of a bandwidth control method according to an exemplary embodiment of the present disclosure.

As shown in FIG. 10, in an implementation, step S530 may include the following steps:
Step S531: Determine, based on the first bandwidth level, a first bandwidth threshold corresponding to the first functional module.

The first bandwidth threshold is a maximum bandwidth allowed to be used by the first functional module for accessing the second hardware unit when the corresponding first operating system corresponds to the first bandwidth level.

In an implementation, at least one bandwidth threshold may be preset for each of the functional modules 11, and a bandwidth level corresponding to each bandwidth threshold may be preset.

A higher bandwidth level indicates a higher memory bandwidth allocated to the operating system and a larger maximum bandwidth allowed to be used by the functional module 11 for accessing the second hardware unit 20, and then a higher bandwidth threshold corresponding to the functional module 11 is. A lower bandwidth level indicates a lower memory bandwidth allocated to the operating system and a smaller maximum bandwidth allowed to be used by the functional module 11 for accessing the second hardware unit 20, and then a lower bandwidth threshold corresponding to the functional module 11 is.

It should be noted that, because different functional modules 11 have different performance requirements, for a same operating system, bandwidths required by different functional modules 11 for accessing the second hardware unit 20 may be the same or different. Therefore, during presetting of a bandwidth threshold for each of the functional modules 11, a bandwidth threshold corresponding to the functional module 11 may be determined based on performance requirements of the functional module 11 and another functional module 11 that may correspond to a same operating system as the functional module 11.

In an implementation, the performance requirement of the functional module 11 may be represented by a priority of the functional module 11. Among a plurality of functional modules 11 corresponding to a same operating system, a functional module 11 with a higher priority indicates that a bandwidth for the functional module 11 for accessing the second hardware unit 20 needs to be more preferentially satisfied. In other words, when there are the functional modules 11 corresponding to a same bandwidth level, a higher bandwidth threshold needs to be set for the functional module 11 with a higher priority. Afunctional module 11 with a lower priority indicates that a bandwidth for the functional module 11 for accessing the second hardware unit 20 may be satisfied later. In other words, when there are the functional modules 11 corresponding to a same bandwidth level, a lower bandwidth threshold may be set for the functional module 11 with a lower priority.

In an implementation, the performance requirement of the functional module 11 may be represented by an amount of access data generated by the functional module 11 when performing a task. Among a plurality of functional modules 11 corresponding to a same operating system, a functional module 11 that is required by a service to have a higher throughput for performing a task requires a higher bandwidth for accessing the second hardware unit 20. Therefore, to ensure performance and efficiency of the functional module 11 when performing a task, a higher bandwidth needs to be allocated to the functional module 11. In other words, when corresponding to a same bandwidth level, a higher bandwidth threshold needs to be set for the functional module 11. Afunctional module 11 that is required by a service to have a lower throughput for performing a task requires a lower bandwidth for accessing the second hardware unit 20. In other words, performance and efficiency of the functional module 11 when performing a task may be ensured by only a low bandwidth. Therefore, when corresponding to a same bandwidth level, a lower bandwidth threshold may be set for the functional module 11.

It should be noted that, in a scenario of a plurality of operating systems, service requirements of different operating systems may be different. Therefore, when a same functional module 11 is managed by different operating systems, or when a same functional module 11 corresponds to different operating systems, bandwidths required for accessing the second hardware unit 20 may be the same or different. For example, when a functional module 11-1 is managed by an operating system 1 (that is, when the functional module 11-1 corresponds to the operating system 1), a higher bandwidth is required for accessing the second hardware unit 20. When the functional module 11-1 is managed by an operating system 2 (that is, when the functional module 11-1 corresponds to the operating system 2), a lower bandwidth is required for accessing the second hardware unit 20. The bandwidth threshold corresponding to the functional module 11 may be specifically set appropriately based on a service requirement of each of the operating systems, which is not specifically limited herein.

In an implementation, for a same bandwidth level corresponding to different operating systems, bandwidth thresholds corresponding to the functional module 11 may be the same.

For example, correspondences between bandwidth levels and bandwidth thresholds may be shown in Table 6. It should be noted that, values shown in Table 6 are only examples, and do not constitute specific limitations on the embodiments of the present disclosure.

**Table 6**

| Bandwidth Level | Bandwidth Threshold |
|---|---|
| 1 | 70 Gbps |
| 2 | 50 Gbps |
| 3 | 40 Gbps |
| 4 | 30 Gbps |
| ... | ... |

As shown in Table 6, in an example in which the functional module 11 currently corresponds to the operating system 1 and the operating system 1 currently corresponds to the bandwidth level of 1, it may be determined that the bandwidth threshold corresponding to the functional module 11 is 70 Gbps, while in an example in which the functional module 11 currently corresponds to the operating system 2 and the operating system 2 currently corresponds to the bandwidth level of 2, it may be determined that the bandwidth threshold corresponding to the functional module 11 is 50 Gbps.

In another implementation, for a same bandwidth level corresponding to different operating systems, bandwidth thresholds corresponding to the functional module 11 may be different. Based on service requirements of the operating systems, for a same bandwidth level, if the functional module 11 requires a higher bandwidth for accessing the second hardware unit 20, the functional module 11 may correspond to a higher bandwidth threshold; or if the functional module 11 requires a lower bandwidth for accessing the second hardware unit 20, the functional module 11 may correspond to a lower bandwidth threshold.

In an implementation, the correspondence between bandwidth levels and bandwidth thresholds further includes identification information of an operating system corresponding to the correspondence. The identification information of the operating system is used for identifying the operating system corresponding to the correspondence, and may include an ID, an address, a name, and the like of the operating system. When determining a bandwidth threshold corresponding to the first functional module, the first control module first determines a correspondence corresponding to the first operating system in the correspondences, and then determines, based on the correspondence, the bandwidth threshold corresponding to the first functional module.

For example, correspondences between bandwidth levels and bandwidth thresholds for the respective operating systems may be shown in Table 7. It should be noted that, values shown in Table 7 are only examples, and do not constitute specific limitations on the embodiments of the present disclosure.

**Table 7**

| Bandwidth Level | Bandwidth Threshold (OS 1) | Bandwidth Threshold (OS 2) | Bandwidth Threshold (OS 3) |
|---|---|---|---|
| 1 | 70 Gbps | 50 Gbps | 60 Gbps |
| 2 | 50 Gbps | 30 Gbps | 50 Gbps |
| 3 | 30 Gbps | 10 Gbps | 40 Gbps |
| 4 | 20 Gbps | 5 Gpbs | 30 Gbps |
| ... | ... | ... | ... |

As shown in Table 7, in an example in which the first functional module currently corresponds to the operating system 1 and the operating system 1 corresponds to the bandwidth level of 1, the first control module may determine, based on a name such as "operating system 1" of the first operating system, that a correspondence corresponding to the operating system 1 is a correspondence between the first column of bandwidth thresholds and bandwidth levels among the correspondences. The first control module may determine, based on the correspondence, that a bandwidth threshold corresponding to the bandwidth level 1 is 70 Gbps. In other words, the first bandwidth threshold corresponding to the first functional module is 70 Gbps. In an example in which the first functional module currently corresponds to the operating system 3 and the operating system 3 corresponds to the bandwidth level of 3, the first control module may determine, based on a name such as "operating system 3" of the first operating system, that a correspondence corresponding to the operating system 3 is a correspondence between the third column of bandwidth thresholds and bandwidth levels among the correspondences. The first control module may determine, based on the correspondence, that a bandwidth threshold corresponding to the bandwidth level 3 is 40 Gbps. In other words, the first bandwidth threshold corresponding to the first functional module is 40 Gbps.

In an implementation, a correspondence, corresponding to each of the functional modules 11, between bandwidth levels and bandwidth thresholds may be stored in a register corresponding to the corresponding bandwidth control module 40. Each bandwidth control module 40 may correspond to one register, or a plurality of bandwidth control modules 40 may share a register, which is not limited herein.

Step S532: Control the first bandwidth based on the first bandwidth threshold.

In an implementation, the first bandwidth is controlled to be less than or equal to the first bandwidth threshold.

In an implementation, the access of the first functional module to the second hardware unit 20 passes through the first control module, the first control module may throttle the access based on the first bandwidth threshold, so that the first bandwidth for the first functional module for accessing the second hardware unit 20 is less than or equal to the first bandwidth threshold.

In an example, with reference to the schematic diagram of dynamic controlling of access bandwidths illustrated in FIG. 11, the operating system 1 corresponds to the functional module 11-1, and the operating system 2 corresponds to the functional module 11-2, where the functional module 11-1 corresponds to the bandwidth control module 40-1, and the functional module 11-2 corresponds to the bandwidth control module 40-2. When the operating system 1 corresponds to the bandwidth level of 1, and the operating system 2 corresponds to the bandwidth level of 2, the indicator module 40 respectively transmit, to the bandwidth control module 40-1 and the bandwidth control module 40-2, bandwidth levels respectively corresponding to the operating systems 1 and 2. For example, the bandwidth level of the operating system 1 is 1, and the bandwidth level of the operating system 2 is 2. Correspondingly, each of the bandwidth control modules may acquire the bandwidth levels corresponding to the operating systems 1 and 2. For example, the bandwidth control module 40-1 may acquire the bandwidth level of 1 of the operating system 1 and the bandwidth level of 2 of the operating system 2. The bandwidth control module 40-2 may acquire the bandwidth level of 1 of the operating system 1 and the bandwidth level of 2 of the operating system 2. Each of the bandwidth control modules acquires a bandwidth level corresponding to an operating system corresponding to a corresponding functional module. The bandwidth control module 40-1 may determine, based on the bandwidth level of 1 of the operating system 1 and the bandwidth level of 2 of the operating system 2, that the bandwidth level corresponding to the operating system 1 is 1. The bandwidth control module 40-2 may determine, based on the bandwidth level of 1 of the operating system 1 and the bandwidth level of 2 of the operating system 2, that the bandwidth level corresponding to the operating system 2 is 2. Each of the bandwidth control modules determines, based on a correspondence between a bandwidth level corresponding to a corresponding functional module and a bandwidth threshold, a bandwidth threshold corresponding to the corresponding functional module. With reference to Table 7, the bandwidth control module 40-1 may determine, based on a name of the operating system 1, a correspondence between a bandwidth level and a bandwidth threshold when the functional module 11-1 corresponds to the operating system 1, and based on the correspondence, the bandwidth control module 40-1 may determine that a bandwidth threshold currently corresponding to the functional module 11-1 is 70 Gbps. The bandwidth control module 40-2 may determine, based on a name of the operating system 2, a correspondence between a bandwidth level and a bandwidth threshold when the functional module 11-2 corresponds to the operating system 2, and based on the correspondence, the bandwidth control module 40-2 may determine that a bandwidth threshold currently corresponding to the functional module 11-2 is 30 Gbps. The bandwidth control modules control, based on bandwidth thresholds corresponding to the corresponding functional modules, bandwidths for the functional modules for accessing the second hardware unit 20. When the access of the functional module 11-1 to the second hardware unit 20 passes through the bandwidth control module 40-1, the bandwidth control module 40-1 throttles the access based on the bandwidth threshold of 70 Gbps, so that a bandwidth for the access to be transmitted through the bus is less than or equal to 70 Gbps. When the access of the functional module 11-2 to the second hardware unit 20 passes through the bandwidth control module 40-2, the bandwidth control module 40-2 throttles the access based on the bandwidth threshold of 30 Gbps, so that a bandwidth for the access to be transmitted through the bus is less than or equal to 30 Gbps.

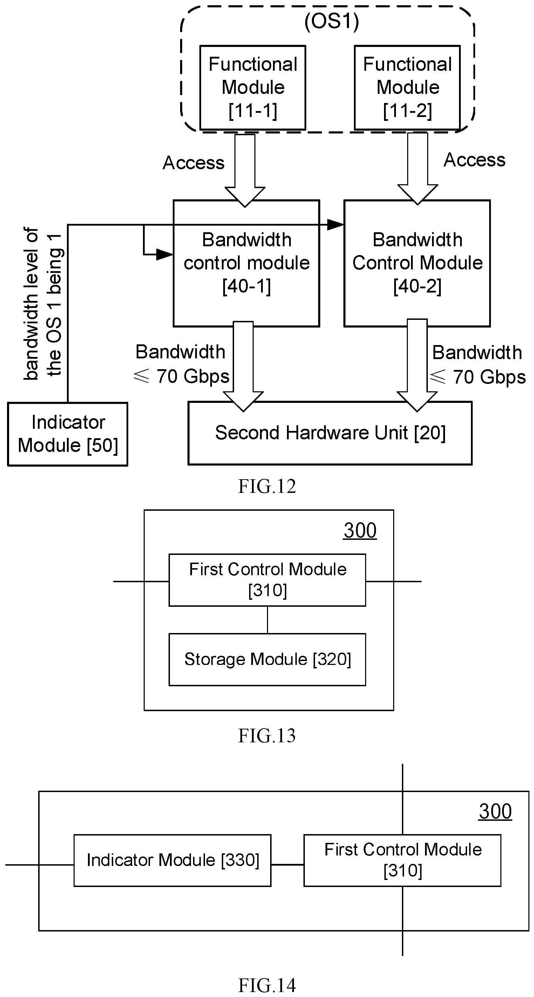

In another example, with reference to the bandwidth control system shown in FIG. 12, the operating system 1 corresponds to the functional module 11-1 and the functional module 11-2, where the functional module 11-1 corresponds to the bandwidth control module 40-1, and the functional module 11-2 corresponds to the bandwidth control module 40-2. When the operating system 1 corresponds to the bandwidth level of 1, the indicator module 50 respectively transmit, to the bandwidth control module 40-1 and the bandwidth control module 40-2, the bandwidth level corresponding to the operating system 1. For example, the bandwidth level of the operating system 1 is 1. Correspondingly, each of the bandwidth control modules may acquire the bandwidth level corresponding to the operating system 1. For example, the bandwidth control module 40-1 may acquire the bandwidth level of 1 of the operating system 1, and the bandwidth control module 40-2 may acquire the bandwidth level of 1 of the operating system 1. Each of the bandwidth control modules acquires a bandwidth level corresponding to an operating system corresponding to a corresponding functional module. The bandwidth control module 40-1 may determine that the bandwidth level corresponding to the operating system 1 is 1. The bandwidth control module 40-2 may determine that the bandwidth level corresponding to the operating system 1 is 1. Each of the bandwidth control modules determines, based on a correspondence between a bandwidth level corresponding to a corresponding functional module and a bandwidth threshold, a bandwidth threshold corresponding to the corresponding functional module. With reference to Table 7, the bandwidth control module 40-1 may determine, based on a name of the operating system 1, a correspondence between a bandwidth level and a bandwidth threshold when the functional module 11-1 corresponds to the operating system 1, and based on the correspondence, the bandwidth control module 40-1 may determine that a bandwidth threshold currently corresponding to the functional module 11-1 is 70 Gbps. The bandwidth control module 40-2 may determine, based on a name of the operating system 1, a correspondence between a bandwidth level and a bandwidth threshold when the functional module 11-2 corresponds to the operating system 1, and based on the correspondence, the bandwidth control module 40-2 may determine that a bandwidth threshold currently corresponding to the functional module 11-2 is 70 Gbps. The bandwidth control modules control, based on bandwidth thresholds corresponding to the corresponding functional modules, bandwidths for the functional modules for accessing the second hardware unit 20. When the access of the functional module 11-1 to the second hardware unit 20 passes through the bandwidth control module 40-1, the bandwidth control module 40-1 throttles the access based on the bandwidth threshold of 70 Gbps, so that a bandwidth for the access to be transmitted through the bus is less than or equal to 70 Gbps. When the access of the functional module 11-2 to the second hardware unit 20 passes through the bandwidth control module 40-2, the bandwidth control module 40-2 throttles the access based on the bandwidth threshold of 70 Gbps, so that a bandwidth for the access to be transmitted through the bus is less than or equal to 70 Gbps.

It should be noted that during operation of each of the operating systems, an amount of access of each of the operating systems to the second hardware unit 20 changes dynamically. Correspondingly, a memory bandwidth allocated to each of the operating systems also changes dynamically, and therefore, the bandwidth level corresponding to each of the operating systems also changes dynamically. Therefore, the bandwidth threshold determined by the bandwidth control module 40 for the functional module 11 also changes dynamically. In other words, the bandwidth control module 40 dynamically controls the bandwidth for the functional module 11 for accessing the second hardware unit 20.

In an implementation, when a system state of the operating system changes, for example, when the first state value of the command queue in the bandwidth sharing module 60 changes, the indicator module 50 re-determines, based on the changed first state value, the bandwidth level corresponding to each of the operating systems, and transmits a latest bandwidth level to the first control module. The first control module acquires a latest bandwidth level corresponding to the first functional module, and re-determines, based on the latest bandwidth level, the first bandwidth threshold corresponding to the first functional module. The first control module controls, based on the re-determined first bandwidth threshold, the first bandwidth for the first functional module for accessing the second hardware unit 20.

For example, the functional module 11-1 corresponds to the operating system 2, and the bandwidth control module 40-1 corresponding to the functional module 11-1 has determined, based on the bandwidth level of 1 corresponding to the operating system 2, the bandwidth threshold corresponding to the functional module 11-1, such as 70 Gbps, and controls the bandwidth for the functional module 11-1 for accessing the second hardware unit 20 to be less than or equal to 70 Gbps. If the first state value of the command queue in the bandwidth sharing module 60 changes, which leads to re-allocation of the memory bandwidth to the operating system 2, the indicator module 50 re-determines the bandwidth level of the operating system 2 based on the changed first state value, and transmits a latest bandwidth level corresponding to the operating system 2 to the bandwidth control module 40-1. For example, the latest bandwidth level corresponding to the operating system 2 is 2. After acquiring the latest bandwidth level corresponding to the operating system 2, the bandwidth control module 40-1 re-determines, based on the bandwidth level of 2, the bandwidth threshold corresponding to the functional module 11-1, such as 50 Gbps, and controls the bandwidth for the functional module 11-1 for accessing the second hardware unit 20 to be less than or equal to 50 Gbps.

It may be learned that, this implementation may allow the bandwidth for the functional module 11 for accessing the second hardware unit 20 to adapt to the memory bandwidth dynamically allocated to the operating system.

It should also be noted that, during operation of each of the operating systems, a service performed by each of the operating systems changes dynamically. Correspondingly, the functional module 11 corresponding to the operating system also changes dynamically, and therefore, for the functional module 11, the bandwidth level corresponding to the operating system corresponding to the functional module 11 also changes dynamically. Therefore, the bandwidth threshold determined by the bandwidth control module 40 for the functional module 11 also changes dynamically. In other words, the bandwidth control module 40 dynamically controls the bandwidth for the functional module 11 for accessing the second hardware unit 20.

In an implementation, if the operating system corresponding to the first functional module is changed, the first control module needs to re-determine, based on a bandwidth level corresponding to the changed operating system, the first bandwidth threshold corresponding to the first functional module, and control, based on the re-determined first bandwidth threshold, the bandwidth for the first functional module for accessing the second hardware unit 20.

For example, the functional module 11-1 corresponds to the operating system 1, and the bandwidth control module 40-1 corresponding to the functional module 11-1 has determined, based on the bandwidth level of 1 corresponding to the operating system 1, the bandwidth threshold corresponding to the functional module 11-1, such as 70 Gbps, and controls the bandwidth for the functional module 11-1 for accessing the second hardware unit 20 to be less than or equal to 70 Gbps. If the functional module 11-1 is changed to correspond to the operating system 2, after acquiring the bandwidth level corresponding to the operating system 2, such as 2, the bandwidth control module 40-1 re-determines, based on the bandwidth level of 2, the bandwidth threshold corresponding to the functional module 11-1, such as 50 Gbps, and controls the bandwidth for the functional module 11-1 for accessing the second hardware unit 20 to be less than or equal to 50 Gbps.

It may be learned that, this implementation may allow the bandwidth for the functional module 11 for accessing the second hardware unit 20 to adapt to the dynamically changing correspondence between the functional module 11 and the operating system.

In the embodiments of the present disclosure, the first control module may control the bandwidth for the first functional module for accessing the second hardware unit 20 by means of bandwidth throttling, or may control the bandwidth for the first functional module for accessing the second hardware unit 20 by means of outstanding request throttling. In addition, the first control module may also control the bandwidth for the first functional module for accessing the second hardware unit 20 by bandwidth throttling in conjunction with outstanding request throttling. Certainly, the first control module may also control the bandwidth for the first functional module for accessing the second hardware unit 20 in other throttling manners, which is not limited in the embodiments of the present disclosure.

### Exemplary Apparatus

The bandwidth control method provided in the embodiments of the present disclosure is described above. It may be understood that, to implement the functions of the bandwidth control method, an integrated circuit (such as a SoC 100) or a first hardware unit 10 in the SoC 100 may include corresponding hardware and software for implementing hardware functions.

A person skilled in the art should easily conceive that, the steps of the bandwidth control method described in conjunction with the embodiments of the present disclosure may be implemented in a form of hardware or a combination of software-driven hardware in the embodiments of the present disclosure. Whether a certain function is implemented in a form of hardware or software-driven hardware depends on specific application and design constraints of the technical solutions. A person skilled in the art may use different methods to implement the described functions for each specific application, but such implementation should not be considered as being beyond the scope of the present disclosure.

FIG. 13 is a schematic diagram illustrating a structure of a bandwidth control apparatus according to an exemplary embodiment of the present disclosure.

As shown in FIG. 13, in an embodiment, the bandwidth control apparatus 300 may include
a control module 310 disposed in correspondence with a first functional module of the first hardware unit 10. The first control module 310 is configured to: acquire a first address for first access of the first functional module to a second hardware unit 20, where the second hardware unit 20 includes at least one address range. The first control module 310 is further configured to determine a first address range corresponding to the first address. The first control module 310 is further configured to control a bandwidth for the first access based on a current bandwidth for the first address range.

In an implementation, the first control module 310 is configured to: determine a first bandwidth threshold corresponding to the first address range; and control the bandwidth for the first access based on the first bandwidth threshold and the current bandwidth for the first address range.

In an implementation, the first control module 310 is configured to: acquire a first bandwidth level corresponding to the first address range; and determine, based on the first bandwidth level, the first bandwidth threshold according to a correspondence, corresponding to the first address range, between at least one bandwidth level and at least one bandwidth threshold.

In an implementation, the bandwidth control apparatus may further include a storage module 320 configured to store a bandwidth level corresponding to at least one address range, for example, store the first bandwidth level corresponding to the first address range. In an example, the storage module 320 may include one or more registers.

In an implementation, the first control module 310 is configured to acquire the first bandwidth level corresponding to the first address range from the storage module 320.

In an implementation, the first control module 310 is configured to: transmit the first access when the current bandwidth for the first address range is less than the first bandwidth threshold; or block the first access when the current bandwidth for the first address range is greater than or equal to the first bandwidth threshold.

It may be learned from the foregoing technical solutions that, according to the apparatus provided in the embodiments of the present disclosure, the bandwidth for the first access may be controlled based on the current bandwidth for the first address range by using a correspondence between address ranges and operating systems, so that a bandwidth for an operating system corresponding to the first address range for accessing the second hardware unit 20 may be controlled to cause the bandwidth for the operating system for accessing the second hardware unit 20 to match a bandwidth resource acquired by the operating system, thereby reducing access delay, reducing data waiting, and improving operating efficiency of a processor and performance of the operating system.

FIG. 14 is a schematic diagram illustrating a structure of a bandwidth control apparatus according to another exemplary embodiment of the present disclosure.

As shown in FIG. 14, in an embodiment, the bandwidth control apparatus 300 includes
a first control module 310 disposed in correspondence with a first functional module of the first hardware unit 10. The first hardware unit 10 includes at least one functional module 11, which is managed by at least one operating system. The first hardware unit 10 is in a communication connection to the second hardware unit 20.

The first control module 310 is configured to determine a first operating system that manages the first functional module; acquire a first bandwidth level corresponding to the first operating system; and control, based on the first bandwidth level, a first bandwidth for the first functional module for accessing the second hardware unit 20.

In an implementation, the bandwidth control apparatus may further include an indicator module 330 in a communication connection to the first control module 310. The indicator module 330 is configured to: generate a bandwidth level respectively corresponding to at least one operating system, where the bandwidth level corresponding to the at least one operating system includes the first bandwidth level corresponding to the first operating system.

In an example, the indicator module 330 may be a bandwidth allocation module.

In an implementation, the bandwidth control apparatus may further include a bandwidth sharing module in a communication connection to the indicator module 330. The bandwidth sharing module has a corresponding register, in which a command queue is stored. The command queue may be used for caching of access commands for the functional modules 11 for accessing the second hardware unit 20, such as a read access command and a write access command. A usage state of the command queue may include a first state value of the command queue. Magnitude of the first state value represents an idle level or a crowding level of the command queue. The first state value may include a number of available entries or a number of unavailable entries in the command queue. The bandwidth control apparatus is configured to transmit the first state value of the command queue to the indicator module 330.

In an implementation, the indicator module 330 is configured to determine a corresponding bandwidth level based on a state of an operating system, for example, determine, based on the first state value, bandwidth levels respectively corresponding to the operating systems.

In an implementation, the indicator module 330 is configured to write the bandwidth levels respectively corresponding to the operating systems into the corresponding register.

In an implementation, the indicator module 330 is configured to: generate corresponding bandwidth level indicators based on the bandwidth levels respectively corresponding to the operating systems, and write the bandwidth level indicators into the corresponding register. The indicator module 330 may generate one bandwidth level indicator, which is used for indicating the bandwidth levels corresponding to the operating systems. Alternatively, the indicator module 330 may generate a plurality of bandwidth level indicators, each of which correspondingly indicates a bandwidth level corresponding to an operating system.

In an implementation, the first control module 310 is configured to: read the bandwidth levels respectively corresponding to the operating systems from the indicator module 330, for example, read the bandwidth levels respectively corresponding to the operating systems from the register corresponding to the indicator module 330, and determine, in the read bandwidth levels respectively corresponding to the operating systems, the first bandwidth level corresponding to the first operating system.

In an implementation, the first control module 310 is configured to: determine, based on the first bandwidth level, a first bandwidth threshold corresponding to the first functional module, and control the first bandwidth based on the first bandwidth threshold.

In an implementation, the first control module 310 is configured to determine, based on a correspondence between at least one bandwidth level and a bandwidth threshold, the first bandwidth threshold corresponding to the first bandwidth level.

In an implementation, the first control module 310 is configured to control the first bandwidth to be less than or equal to the first bandwidth threshold.

It may be learned from the foregoing technical solutions that, according to the apparatus provided in the embodiments of the present disclosure, after the bandwidth level corresponding to the operating system corresponding to the functional module 11 is determined, the bandwidth for the functional module 11 for accessing the second hardware unit 20 may be controlled based on the bandwidth level, so that the functional module 11 may access the second hardware unit 20 by a bandwidth matching the memory bandwidth allocated to the operating system, thereby avoiding access congestion.

### Exemplary Integrated Circuit

An embodiment of the present disclosure further provides an integrated circuit, which may be, for example, a SoC.

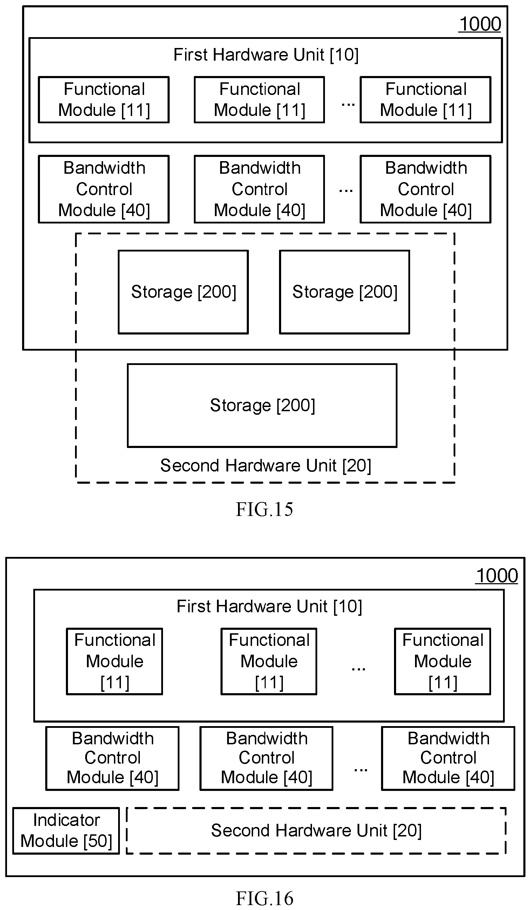

FIG. 15 is a schematic diagram illustrating a structure of an integrated circuit according to an exemplary embodiment of the present disclosure.

As shown in FIG. 15, in an implementation, an integrated circuit 1000 includes a first hardware unit 10, on which a plurality of operating systems run. The first hardware unit 10 may include at least one functional module 11, which is managed by at least one operating system. The first hardware unit 10 is in a communication connection to a second hardware unit 20. Each functional module 11 is configured to implement one or more functions of the integrated circuit 1000. For example, the functional module 11 may be a CPU, a GPU, an NPU, an ISP, a DSP or the like.

In an implementation, each functional module 11 of the first hardware unit 10 may communicate with another hardware unit (such as the second hardware unit 20), for example, access the second hardware unit 20.

The second hardware unit 20 may include one or more storages 200, such as a memory, or other hardware units that communicate with the first hardware unit 10. For example, the second hardware unit 20 may be a DRAM and/or a SRAM. Correspondingly, a memory bandwidth includes a bandwidth of a DRAM bus (DRAM bandwidth for short) and/or a bandwidth of a SRAM bus (SRAM bandwidth for short).

In an implementation, at least one storage 200 in the second hardware unit 20 may be located on the integrated circuit 1000, as a part of the integrated circuit 1000.

In an embodiment, the integrated circuit 1000 further includes at least one bandwidth control module 40 disposed in one-to-one correspondence to the at least one functional module 11. Each bandwidth control module 40 is in a communication connection to a functional module 11 corresponding thereto. The at least one bandwidth control module 40 is configured to implement a function of the first control module in the bandwidth control apparatus, for example, implement the steps of the bandwidth control method provided in the embodiments of the present disclosure.

In an example, the bandwidth control module 40 may acquire an address for access of the functional module 11 in the communication connection to the bandwidth control module 40 to the second hardware unit 20; then determine an address range corresponding to the address; and then control a bandwidth for the access based on a current bandwidth for the address range.

It may be learned from the foregoing technical solutions that, according to the integrated circuit provided in the embodiments of the present disclosure, a bandwidth for an operating system corresponding to an address range for accessing a hardware unit may be controlled based on a current bandwidth for the address range by using a correspondence between address ranges and operating systems, so that a bandwidth for the operating system for accessing the second hardware unit 20 is caused to match a bandwidth resource acquired by the operating system, thereby reducing access delay, reducing data waiting, and improving operating efficiency of a processor and performance of the operating system.

FIG. 16 is a schematic diagram illustrating a structure of an integrated circuit according to another exemplary embodiment of the present disclosure.

As shown in FIG. 16, in an embodiment, on the basis of what is shown in FIG. 15, the integrated circuit 1000 further includes an indicator module 50. The indicator module 50 may be a bandwidth allocation module. The indicator module 50 is configured to generate bandwidth levels respectively corresponding to the operating systems.

In an implementation, the indicator module 50 may determine, based on states of the operating systems, such as states of the operating systems for accessing the second hardware unit 20, the bandwidth levels corresponding to the operating systems.

In an example, the bandwidth control module 40 is configured to: determine an operating system corresponding to each functional module 11, acquire a bandwidth level corresponding to each operating system, and control, based on the bandwidth level corresponding to each operating system, a bandwidth for each functional module 11, managed by each operating system, for accessing the second hardware unit 20.

It may be learned from the foregoing technical solutions that, according to the integrated circuit provided in the embodiments of the present disclosure, a bandwidth for a functional module 11 for accessing the second hardware unit 20 may be dynamically controlled based on a bandwidth level corresponding to an operating system that manages the functional module 11, so that the functional module 11 may access the second hardware unit 20 by a bandwidth matching a memory bandwidth that may be used by the corresponding operating system, to avoid causing congestion during access.

### Exemplary Electronic Device

An embodiment of the present disclosure provides an electronic device that may be applied in vehicles, such as an intelligent connected vehicle. The electronic device may be, for example, an in-vehicle computing device, an in-vehicle computing platform, an in-vehicle computing unit, or an intelligent driving computing platform.

In an embodiment, the electronic device may include the integrated circuit according to the embodiments of the present disclosure. At least one operating system may run on the integrated circuit, such as an intelligent driving system and a cockpit system, to implement relevant functions of a cockpit-driving integrated system.

In an embodiment, the electronic device may further include:
a housing configured to accommodate and mount hardware units of the electronic device to protect the hardware units from dust and water immersion and improve reliability of the electronic device;
a power module configured to supply power to the hardware units of the electronic device;
a heat dissipator module, such as a cooling fan or a liquid cooling device, configured to dissipate heat for the hardware units of the electronic device, so as to reduce operating temperature of each of the hardware units and improve operational stability of each of the hardware units; and
an external interface configured to connect sensors on the vehicle, such as a camera, laser radar, millimeter wave radar, and ultrasonic radar, to transmit instructions to the sensors or receive data returned by the sensors. The external interface may also connect actuators of the vehicle, such as a driving system, a braking system, and a steering system, to transmit control instructions to the systems and receive feedback from the systems.

### Exemplary Vehicle

An embodiment of the present disclosure provides a vehicle, which may include a land vehicle, an aerial vehicle, a maritime vehicle, an underwater vehicle, a space vehicle, and the like. For details of specific content of the vehicle, reference may be made to the foregoing embodiments, and details are not described herein again. The vehicle may include the integrated circuit or the electronic device according to the embodiments of the present disclosure, so as to implement the bandwidth control method according to the embodiments of the present disclosure.

### Exemplary Computer Program Product And Computer Readable Storage Medium

In addition to the foregoing method and device, the embodiments of the present disclosure may also relate to a computer program product including computer program instructions that, when run by a processor, cause the processor to implement the steps of the bandwidth control method according to the embodiments of the present disclosure that is described in the "exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to implement the steps of the bandwidth control method according to the embodiments of the present disclosure that is described in the "exemplary method" section of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, apparatus, or device, or any combination of the above. More specific examples (a non-exhaustive list) of the readable storage medium include: an electrical connection with one or more conducting wires, a portable disk, a hard disk, a RAM, a ROM, an EPROM or a flash memory, an optical fiber, a portable compact disk ROM (CD-ROM), an optical storage device, a magnetic storage device, or any suitable combination of the above.

Basic principles of the present disclosure are described above in combination with specific embodiments. However, it should be pointed out that the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details described above are merely for examples and for ease of understanding, rather than limitations. The details described above do not limit that the present disclosure must be implemented by using the foregoing specific details.

The block diagrams of the means, apparatus, device, and system involved in the present disclosure are provided as illustrative examples only, and it is not intended to require or imply that they should be connected, arranged, or configured in the manner illustrated in the block diagrams. As a person skilled in the art will appreciate, these means, apparatuses, devices, and systems may be connected, arranged, or configured in any manner. Terms such as "including", "containing", and "having" are open-ended terms, and refer to and may be used interchangeably with "including but not limited to". The terms "or" and "and" as used herein refer to and may be used interchangeably with the term "and/or", unless otherwise clearly stated in the context. The term "such as" as used herein refers to and may be used interchangeably with the term "such as, but not limited to".

It should be further pointed out that, various components or various steps in the apparatus, the device, and the methods of the present disclosure may be decomposed and/or recombined. These decompositions and/or recombinations should be considered as equivalent solutions of the present disclosure.

The above description of the disclosed aspects is provided, so that the present disclosure may be arrived at or carried out by any person skilled in the art. Various modifications to these aspects will be readily apparent to a person skilled in the art, and the generic principles defined herein may be applied to other aspects without departing from the scope of the present disclosure. Therefore, the present disclosure is not intended to be limited to the aspects shown herein, but rather to the widest scope consistent with the principles and novel features disclosed herein.

The above description has been given for the purposes of illustration and description. In addition, this description is not intended to limit the embodiments of the present disclosure to the forms disclosed herein. Although a plurality of exemplary aspects and embodiments have been discussed above, a person skilled in the art will figure out certain variations, modifications, changes, additions, and subcombinations thereof.

## Claims

1. A bandwidth control method, comprising:
determining bandwidth levels respectively corresponding to a plurality of functional modules in a first hardware unit, wherein the plurality of functional modules respectively correspond to different operating systems; and
controlling respectively, based on the bandwidth levels respectively corresponding to the functional modules, bandwidths for the functional modules for accessing a second hardware unit.

2. The method according to claim 1, wherein the controlling respectively, based on the bandwidth levels respectively corresponding to the functional modules, bandwidths for the functional modules for accessing a second hardware unit comprises:
determining, based on the bandwidth levels respectively corresponding to the functional modules, bandwidth thresholds respectively corresponding to the functional modules; and
controlling respectively, based on the bandwidth thresholds respectively corresponding to the functional modules, the bandwidths for the functional modules for accessing the second hardware unit.

3. The method according to claim 2, wherein the determining bandwidth levels respectively corresponding to a plurality of functional modules in a first hardware unit comprises:
determining address ranges respectively corresponding to the functional modules for accessing the second hardware unit; and
determining, based on the address ranges respectively corresponding to the functional modules for accessing the second hardware unit, the bandwidth levels respectively corresponding to the functional modules.

4. The method according to claim 3, wherein the determining address ranges respectively corresponding to the functional modules for accessing the second hardware unit comprises:
determining access addresses respectively corresponding to the functional modules for accessing the second hardware unit; and
determining, based on the access addresses respectively corresponding to the functional modules for accessing the second hardware unit, the address ranges respectively corresponding to the functional modules for accessing the second hardware unit.

5. The method according to claim 3, wherein the controlling respectively, based on the bandwidth thresholds respectively corresponding to the functional modules, the bandwidths for the functional modules for accessing the second hardware unit comprises:
controlling respectively, based on the bandwidth thresholds respectively corresponding to the functional modules and current bandwidths of the address ranges, the bandwidths for the functional modules for accessing the second hardware unit.

6. The method according to claim 5, wherein the controlling respectively, based on the bandwidth thresholds respectively corresponding to the functional modules and current bandwidths of the address ranges, the bandwidths for the functional modules for accessing the second hardware unit comprises:
determining values of the bandwidth thresholds respectively corresponding to the functional modules and values of the current bandwidths of the address ranges for the functional modules for accessing the second hardware unit; and
controlling respectively, based on the values of the bandwidth thresholds respectively corresponding to the functional modules and the values of the current bandwidths of the address ranges for the functional modules for accessing the second hardware unit, the bandwidths for the functional modules for accessing the second hardware unit.

7. The method according to claim 6, wherein the controlling respectively, based on the values of the bandwidth thresholds respectively corresponding to the functional modules and the values of the current bandwidths of the address ranges for the functional modules for accessing the second hardware unit, the bandwidths for the functional modules for accessing the second hardware unit comprises:
transmitting, in response to a current bandwidth for an address range for any first functional module in the functional modules for accessing the second hardware unit being less than a bandwidth threshold corresponding to the first functional module, the access of the first functional module to the second hardware unit; or
blocking, in response to a current bandwidth for an address range for any first functional module in the functional modules for accessing the second hardware unit being greater than or equal to a bandwidth threshold corresponding to the first functional module, the access of the first functional module to the second hardware unit.

8. The method according to claim 2, wherein the controlling respectively, based on the bandwidth thresholds respectively corresponding to the functional modules, the bandwidths for the functional modules for accessing the second hardware unit comprises:
controlling the bandwidths for the functional modules for accessing the second hardware unit to be less than the bandwidth thresholds respectively corresponding to the functional modules.

9. The method according to claim 1, wherein the determining bandwidth levels respectively corresponding to a plurality of functional modules in a first hardware unit comprises:
determining the respective operating systems managing the respective functional modules; and
determining the bandwidth levels respectively corresponding to the plurality of functional modules by determining bandwidth levels corresponding to the respective operating systems.

10. The method according to claim 9, wherein the determining bandwidth levels corresponding to the respective operating systems comprises:
determining the bandwidth levels corresponding to the respective operating systems based on a usage state of a command queue for caching of access commands for the functional modules for accessing the second hardware unit,
wherein the usage state of the command queue is indicated by indication information representing an idle or crowding level of the command queue.

11. A bandwidth control system, comprising:
a first hardware unit comprising a plurality of functional modules, wherein the plurality of functional modules respectively correspond to different operating systems;
a second hardware unit in communication with the plurality of functional modules; and
a plurality of bandwidth control modules in one-to-one correspondence to the plurality of functional modules, wherein each of the bandwidth control modules is disposed between the first hardware unit and the second hardware unit, and is configured to: determine bandwidth levels respectively corresponding to the functional modules in the first hardware unit; and control respectively, based on the bandwidth levels respectively corresponding to the functional modules, bandwidths for the functional modules for accessing the second hardware unit.

12. The bandwidth control system according to claim 11, further comprising:
an indicator module in communication with the bandwidth control modules and configured to generate bandwidth levels respectively corresponding to multiple operating systems, wherein
the bandwidth control modules are further configured to determine, based on the operating systems respectively corresponding to the functional modules and the bandwidth levels respectively corresponding to the multiple operating systems, the bandwidth levels respectively corresponding to the functional modules.

13. An electronic device, comprising the bandwidth control system according to claim 11 or 12.

14. A vehicle, comprising the bandwidth control system according to claim 11 or 12 or the electronic device according to claim 13.

15. A non-transitory computer readable storage medium, on which a computer program is stored, wherein the computer program, when executed by a processor, causes the processor to perform the bandwidth control method according to any one of claims 1 to 10.
